# EUROPÄISCHE PATENTSCHRIFT

(11) **EP 2 831 430 B1**
(45) Veröffentlichungstag und Bekanntmachung des Hinweises auf die Patenterteilung: **14.08.2019**
(21) Anmeldenummer: 12809591.6
(22) Anmeldetag: 06.12.2012
(51) Int. Cl.: F15B 21/04, B60G 17/052

(54) **DRUCKMITTELVERSORGUNGSANLAGE, PNEUMATISCHES SYSTEM UND VERFAHREN ZUM BETREIBEN EINER DRUCKMITTELVERSORGUNGSANLAGE**
PRESSURE FLUID SUPPLY UNIT, PNEUMATIC SYSTEM AND METHOD OF USING A PRESSURE FLUID SUPPLY UNIT
DISPOSITIF D'ALIMENTATION EN FLUIDE SOUS PRESSION, SYSTÈME PNEUMATIQUE ET MÉTHODE D'UTILISATION D'UN DISPOSITIF D'ALEMENTATION EN FLUIDE SOUS PRESSION

(30) Priorität: 30.03.2012 DE 102012006382
(43) Veröffentlichungstag der Anmeldung: 04.02.2015
(73) Patentinhaber: WABCO GmbH, 30453 Hannover (DE)
(72) Erfinder: BERGEMANN, Klaus-Dieter, 30627 Hannover (DE); GEHRKE, Morten, 30974 Wennigsen (DE); MEIER, Jörg, 31840 Hessisch Oldendorf (DE); SCHARPENBERG, Jörg, 30853 Langenhagen (DE)
(74) Vertreter: Lauerwald, Jörg
(86) Internationale Anmeldenummer: PCT/EP2012/005047
(87) Internationale Veröffentlichungsnummer: WO 2013/143566

(56) Entgegenhaltungen:
- EP-A1- 2 681 060
- DE-A1-102008 034 240
- DE-A1-102009 008 351

## Beschreibung

Die Erfindung betrifft eine Druckmittelversorgungsanlage zum Betreiben einer Pneumatikanlage gemäß dem Oberbegriff des Anspruchs 1. Die Druckmittelversorgungsanlage weist eine Druckmittelzuführung, einen Druckmittelanschluss sowie wenigstens einen Druckmittelladeanschluss zur Pneumatikanlage und einer Ansaugleitung, eine Verdichterleitung, eine Entlüftungsleitung und wenigstens eine Druckmittelladeleitung auf. Die Erfindung betrifft auch ein pneumatisches System mit der Druckmittelversorgungsanlage und einer Pneumatikanlage. Weiter betrifft die Erfindung ein Verfahren zum Betreiben einer Druckmittelversorgungsanlage.

Unter einem Druckmittel der Druckmittelversorgungsanlage ist regelmäßig eine Druckluft zu versehen, jedoch nicht darauf beschränkt. So ist beispielsweise eine Druckluftversorgungsanlage in Fahrzeugen aller Art eingesetzt, insbesondere zur Versorgung einer Luftfeder eines Fahrzeugs mit Druckluft. Luftfederanlagen können auch Niveauregelungseinrichtungen umfassen, mit denen der Abstand zwischen Fahrzeugachse und Fahrzeugaufbau eingestellt werden kann. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Es ist weiter wünschenswert, eine Veränderung der Bodenfreiheit möglichst schnell umzusetzen, was die Anforderung hinsichtlich Schnelligkeit, Flexibilität und Verlässlichkeit einer Druckluftversorgungsanlage erhöht. So wird beispielsweise eine Druckluftversorgungsanlage im Rahmen eines Druckniveaus von 5 bis 20 bar, gegebenenfalls jedoch auch mehr betrieben. Insbesondere kann in einem Druckmittelvorratsbehälter Druckmittel unter wesentlich höherem Druck vorgehalten werden. Das Druckmittel, insbesondere Druckluft, wird mit einem Verdichter einer Ladeanordnung der Druckmittelzuführung zur Verfügung gestellt. Die Druckmittelzuführung ist --zur Versorgung der Pneumatikanlage-- mit einem Druckmittelanschluss pneumatisch verbunden und --zur Entlüftung in eine Umgebung-- mit einem Entlüftungsanschluss pneumatisch verbunden, wobei eine pneumatische Verbindung über ein Entlüftungsventil geschaltet wird.

Eine Ladeanordnung kann zur Erhöhung einer Schnelligkeit und Flexibilität der Druckmittelversorgungsanlage ausgelegt sein, um die Druckmittelversorgungsanlage in einem offenen, teilgeschlossenen oder geschlossenen Betrieb zu Betreiben. Eine solche Druckluftversorgungsanlage ist aus DE 10 2008 034 240 A1 bekannt. Diese ermöglicht sowohl die Förderung von Druckmittel aus einem Druckmittelvorratsbehälter in eine oder mehrere Druckmittelkammern der Pneumatikanlage mittels der zweiten Verdichtungsstufe des Verdichters sowie von Druckmittel aus der Atmosphäre in den Druckmittelvorratsbehälter und/oder in eine oder mehrere Druckmittelkammern mittels der ersten und zweiten Verdichtungsstufe des Verdichters. In Strömungsrichtung von einer ersten Verdichterstufe zu einer zweiten Verdichterstufe führenden Verdichterleitung sind selbsttätig öffnende Rückschlagventile als Auslassventil zum ersten Verdichtungsraum bzw. Einlassventil zum zweiten Verdichtungsraum angeordnet. Ein Wegeventil in der Verdichtungsleitung sieht vor, dass der zweistufige Verdichter praktisch im Kreis fördert um die Leistung der ersten Verdichtungsstufe einzusparen bzw. in vorbestimmter Weise zu reduzieren. Das Druckmittel aus dem ersten Verdichtungsraum kann entweder wieder in den Ansaugraum der ersten Verdichtungsstufe oder in die Atmosphäre überführt werden.

Wünschenswert ist es, eine darüber hinausgehende effiziente, insbesondere gleichwohl möglichst zugleich schnelle, flexible sowie verlässliche Betriebsweise einer Druckmittelversorgungsanlage zu ermöglichen; insbesondere soll dies für eine Betriebsweise einer Ladeanordnung in der Druckmittelversorgungsanlage gelten.

Die DE102009008351A1 beschreibt ein Druckluftversorgungssystem mit einem Niederdruckkompressor für die Versorgung eines Niederdruckluftnetz bzw- speicher einer Druckluftbremsanlage eines Fahrzeuges und einem Hochdruckkompressor für die Versorgung eines Hochdruckluftnetz bzw. -speicher einer Reifendruckregel- oder Luftfederungssystemen mit Druckluft. Die im Lastkraftwagenanhänger angeordneten Druckluftbremsanlage bzw. Reifendruckregel- und Luftfederungssysteme werden über eine Hochdruck-Druckluftkupplung mit dem Hochdruckluftnetz und eine Niederdruck-Druckluftkupplung mit einem Niederdruckluftnetz des Druckluftversorgungssystems verbunden, wobei lediglich eine Förderung von Druckluft von dem Druckluftversorgungssystem in Richtung der Druckluftbremsanlage bzw. Reifendruckregel- und Luftfederungssysteme möglich ist.

An dieser Stelle setzt die Erfindung an, deren Aufgabe es ist, eine Vorrichtung und ein Verfahren anzugeben, mittels dessen eine, insbesondere bei einem Senk- und/oder Hebevorgang, hinsichtlich Schnelligkeit und Flexibilität verbesserte, insbesondere zugleich effiziente und/oder sichere Betriebsweise, einer Druckmittelversorgungsanlage möglich ist. Insbesondere sollte ein Druckmittel vergleichsweise effizient vorgehalten werden bzw. mit vergleichsweise reduziertem Aufwand nachhaltig erzeugbar sein; insbesondere gleichwohl schnell erzeugbar sein bzw. zur Verfügung stehen.

Die Aufgabe hinsichtlich der Vorrichtung wird mit einer Druckmittelversorgungsanlage des Anspruchs 1 und einem pneumatischen System des Anspruchs 2 gelöst. Die Aufgabe hinsichtlich des Verfahrens wird mit einem Verfahren des Anspruchs 14 gelöst.

Die Erfindung geht von der Überlegung aus, dass der Betrieb einer Ladeanordnung zwar grundsätzlich sparsam gehandhabt werden kann, wie dies im Stand der Technik vorgeschlagen ist, jedoch ein Betrieb derselben auch --in einer weitergehenden Betrachtung-- in verbesserter Weise ausnutzbar ist. Die Erfindung hat erkannt, dass ein nachhaltig ausgelegtes Konzept zur Förderung von Druckmittel mit der Ladeanordnung unter Berücksichtigung der Druckmittelbevorratung zu einer verbesserten Ausführung der Ladeanordnung in der Druckmittelversorgungsanlage führt. Insbesondere ist des Weiteren die Ladeanordnung der Druckmittelversorgungsanlage in verbesserter Weise an die Peripherie, nämlich insbesondere die Pneumatikanlage, angeschlossen; vorzugsweise ist die Ladeanordnung der Druckmittelversorgungsanlage in verbesserter Weise an einen Druckmittelvorratsbehälter, wie z. B. einen Speicher, und/oder eine Anzahl von Druckmittelkammern, wie z. B. eine Anzahl von Bälgen, angeschlossen. Erfindungsgemäß ist vorgesehen, dass die Ladeanordnung ausgebildet ist, zur gleichzeitigen Führung von am wenigstens einen Druckmittelladeanschluss anstehendem geladenen Druckmittel und von von der ersten Verdichterstufe zur Verfügung gestelltem weiteren Druckmittel zur zweiten Verdichterstufe und zwar abhängig vom Schaltzustand eines ersten und/oder zweiten 2/2-Wege-Ladeventils.

Das so verwirklichte Konzept der Erfindung legt die Ladeanordnung in einer Überwindung der im Stand der Technik als vorteilhaft angenommenen sparsamen Betriebsweise dafür aus, mit verbesserter Lastausnutzung der ersten und der zweiten Verdichterstufe betrieben zu werden. Insbesondere kann die Ladeanordnung dazu Druckmittel aus der ersten Verdichterstufe zur Verfügung stellen und in der zweiten Verdichterstufe weiter verdichten, um dieses der Druckmittelzuführung zur Verfügung zu stellen; ein Lastbetrieb der ersten Verdichterstufe soll möglichst effektiv genutzt werden. Damit wird eine nachhaltige Bertriebsweise zugunsten einer nur sparsamen Betriebsweise in den Vordergrund gestellt. Darüber hinaus kann die Ladeanordnung mit am Druckmittelladeanschluss anstehendem geladenen Druckmittel --insbesondere aus einem Druckmittelvorratsbehälter und/oder einer Druckmittelkammer-- betrieben werden, indem dieses in der zweiten Verdichterstufe weiter verdichtet wird. Dem Konzept der Erfindung folgend wird auch das von der ersten Verdichterstufe zur Verfügung gestellte weitere Druckmittel zur zweiten Verdichterstufe geführt.

Überraschend hat sich dabei gezeigt, dass das insofern von der ersten Verdichterstufe zusätzlich zur Verfügung gestellte weitere Druckmittel beispielsweise nachhaltig zur Erhöhung der Schnelligkeit und der Flexibilität eines pneumatischen Systems genutzt werden kann. Indem das zusätzlich zur Verfügung gestellte Druckmittel, insbesondere in einem Druckmittelvorratsbehälter, vorgehalten wird, kann das zusätzlich zur Verfügung stehende weitere Druckmittel beispielsweise in geeigneter Weise zur Regeneration der Druckmittelversorgungsanlage, insbesondere eines Trockners in einer Pneumatikhauptleitung, genutzt werden. Insbesondere erweist sich dies für einen Senken-Vorgang einer Luftfederanlage und/oder einen Heben-Vorgang einer Luftfederanlage als vorteilhaft, der mittels der Pneumatikanlage umgesetzt wird.

Das Konzept der Erfindung führt auch auf eine Steuer- und Regeleinrichtung, die ausgebildet ist, ein pneumatisches System ansteuernd gemäß dem Verfahren der Erfindung zu betreiben. Dazu kann die Steuer- und Regeleinrichtung mit Software- und/oder Hardware-Modulen versehen sein, die ausgebildet sind, ein oder mehrere Verfahrensschritte des Verfahrens nach einem der Ansprüche 14 bis 22 auszuführen.

Vorteilhafte Weiterbildungen sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Die Ladeanordnung weist einen zwei- oder mehrstufigen Verdichter auf, der druckmittelzuführungsseitig an die Druckmittelzuführung angeschlossen ist. Der zwei- oder mehrstufige Verdichter weist wenigstens eine erste und eine zweite Verdichterstufe auf. Insbesondere ist an die Druckmittelzuführung druckmittelzuführungsseitig ein Ausgang der zweiten oder letzten Verdichterstufe angeschlossen.

Die Entlüftungsleitung zwischen dem Druckmittelanschluss und dem Entlüftungsanschluss weist ein Entlüftungsventil auf und führt im weiteren Verlauf zum Entlüftungsanschluss zur Umgebung. Der Entlüftungsanschluss kann in einer ersten Weiterbildung separat von einem Ansauganschluss gebildet sein. In einer anderen Weiterbildung kann der Entlüftungsanschluss mit einem Ansauganschluss der Ansaugleitung zusammen fallen. Die Ansaugleitung verläuft ansaugseitig des Verdichters zwischen dem Ansauganschluss zur Umgebung und dem Verdichter, insbesondere zwischen einem Ansauganschluss zur Umgebung und dem Eingang der ersten Verdichterstufe. Für den Fall, dass der Ansauganschluss mit dem Entlüftungsanschluss zusammenfällt, kann ein Teil der Ansaugleitung mit einem Teil der Entlüftungsleitung zusammenfallen bzw. gemeinsam genutzt werden. Insbesondere kann dazu die Entlüftungsleitung vor einem Ansaug- und Entlüftungsanschluss auf die Ansaugleitung führen.

Die Verdichterleitung verläuft zwischen der ersten und zweiten Verdichterstufe, insbesondere zwischen dem Ausgang der ersten Verdichterstufe und dem Eingang der zweiten Verdichterstufe. Es hat sich als besonders vorteilhaft erwiesen zur Verwirklichung des Konzepts der Erfindung, dass die Verdichterleitung ausgebildet ist zur gleichzeitigen Führung des geladenen Druckmittels und des weiteren Druckmittels zur zweiten Verdichterstufe. Insbesondere hat es sich als vorteilhaft erwiesen, dass die Verdichterleitung ausgebildet ist zur Führung des geladenen Druckmittels und des weiteren Druckmittels zur zweiten Verdichterstufe frei von Rückhaltedruck. Unter Rückhaltedruck ist insbesondere ein definierter zusätzlicher Rückhaltedruck zu verstehen, beispielsweise ein Rückhaltedruck wie er im Stand der Technik genutzt wird, um einen Leerlaufbetrieb der ersten Verdichterstufe zu gewährleisten. Dagegen sieht die Weiterbildung vor, dass die Verdichterleitung frei ist von einem definierten zusätzlichen Rückhaltedruck, beispielsweise eines pneumatischen Sperr- oder Schaltmittels. Unter einem Sperrmittel ist beispielsweise ein Rückschlagventil zu verstehen. Unter einem Schaltmittel ist beispielsweise ein Wegeventil zu verstehen.

Insbesondere ist das Entlüftungsventil mit einem Ventilanschluss in der Entlüftungsleitung angeschlossen. Ein an der Druckmittelzuführung zur Verfügung gestelltes Druckmittel kann über die pneumatische Hauptleitung zwischen der Druckmittelzuführung und dem Druckmittelanschluss der Pneumatikanlage anstehen.

Insbesondere weist die pneumatische Hauptleitung einen Trockner auf. Zur Sicherstellung eines langfristigen Betriebs einer Druckmittelversorgungsanlage ist das Druckmittel, insbesondere Druckluft, zu trocknen, da dieses regelmäßig mit Feuchtigkeit beladen ist. Dadurch wird die Ansammlung von Feuchtigkeit im Pneumatiksystem vermieden, was anderenfalls bei vergleichsweise niedrigeren Temperaturen zu ventilschädigender Kristallbildung führen könnte und darüber hinaus zu ungewünschten Defekten in der Druckluftversorgungsanlage und in der Pneumatikanlage. Ein Trockner, insbesondere Lufttrockner, weist ein Trockenmittel auf, üblicherweise eine Granulatschüttung, welche von der Druckluft durchströmbar ist, so dass die Granulatschüttung --bei vergleichsweise hohem Druck-- in der Druckluft enthaltende Feuchtigkeit durch Adsorption aufnehmen kann. Ein Lufttrockner kann gegebenenfalls als regenerativer Lufttrockner ausgelegt werden. Dies kann dadurch geschehen, dass die Granulatschüttung bei jedem Entlüftungszyklus --bei vergleichsweise niedrigem Druck-- mit der getrockneten Druckluft aus dem Luftfedersystem im Gegenstrom oder Gleichstrom relativ zur Befüllrichtung durchströmt wird. Dazu kann die Entlüftungsventilanordnung geöffnet werden. Für eine solche --auch als Druckwechseladsorption bezeichnete-- Anwendung hat sich das vorliegende Konzept als vorteilhaft erwiesen; insbesondere ist so eine Druckluftversorgungsanlage flexibel und gleichzeitig verlässlich auszulegen, insbesondere eine vergleichsweise schnelle Entlüftung mit einem dennoch für eine Regeneration des Lufttrockners ausreichenden Druckwechsel ist möglich.

Darüber hinaus ist es auch vorteilhaft möglich unter Nutzung des vorgelegten Konzepts, eine Befüllung der Pneumatikanlage möglichst effektiv vorzunehmen, insbesondere ebenfalls unter Berücksichtigung der Regenerationsfähigkeit des Lufttrockners. Vorteilhaft ist dies auch für den Fall gegeben, dass eine Befüllung in vergleichsweise kurzer Zeit und vergleichsweise hoher Druckamplitude erfolgt. Dies ist insbesondere im vorliegenden Fall einer Druckmittelversorgungsanlage mit einem zwei- oder mehrstufigen Verdichter gegeben, der auch im sogenannten Boostbetrieb zu betreiben ist. Unter einem Boost-Betrieb ist allgemein ein Betrieb der Druckmittelversorgungsanlage zu verstehen, bei dem geladenes Druckmittel --sei es aus einem Druckmittelvorratsbehälter und/oder einer Druckmittelkammer-- und weiteres Druckmittel aus einem Verdichter umverteilt wird. Dies kann vor allem einen Heben-Vorgang betreffen, bei dem Druckmittel aus einem Druckmittelvorratsbehälter über den Verdichter unter Betrieb des Verdichters über den Druckmittelanschluss in eine Druckmittelkammer gelangt. Dies kann aber auch einen Senken-Vorgang betreffen, bei dem Druckmittel aus einer Druckmittelkammer über den Verdichter und unter Betrieb des Verdichters über den Druckmittelanschluss in einen Druckmittelvorratsbehälter gelangt.

Dementsprechend weist die Druckmittelversorgungsanlage wenigstens einen Druckmittelladeanschluss zur Pneumatikanlage auf. Insbesondere kann an dem wenigsten einen Druckmittelladeanschluss, beispielsweise über wenigstens eine Ladezweigleitung ein Druckmittelvorratsbehälter und/oder eine Anzahl von Druckmittelkammern der Pneumatikanlage angeschlossen sein.

Vorzugsweise weist die Pneumatikanlage eine Galerie und wenigstens eine an die Galerie pneumatisch angeschlossene Zweigleitung mit einer Druckmittelkammer --insbesondere einem Balg-- und einem Druckmittelvorratsbehälter-insbesondere einem Druckspeicher-- auf. Eine oder mehrere, insbesondere alle, Zweigleitungen weisen vorteilhaft jeweils ein Wegeventil auf. Im Folgenden wird im Falle einer Druckmittelkammer auch auf einen Balg Bezug genommen bzw. im Falle eines Druckmittelvorratsbehälters auch auf einen Druckspeicher oder Speicher Bezug genommen, was nicht einschränkend gemeint ist gegenüber dem, was allgemein unter einer Druckmittelkammer bzw. Druckmittelvorratsbehälters verstanden werden kann. Insbesondere hat es sich als vorteilhaft erwiesen, dass eine als Speicherleitung gebildete Zweigleitung ein dem Druckspeicher vorgeordnetes Speicherventil aufweist und/oder eine als Balgleitung gebildete Zweigleitung ein dem Balg vorgeordnetes Balgventil aufweist. Die für die Hebe- und Senk-Vorgänge der Federanlage erforderlichen Öffnungs- und Schließvorgänge der Wegeventile lassen sich so für jeden Balg bzw. Druckspeicher einzeln oder in Kombination umsetzen.

Insbesondere hat es sich als vorteilhaft erwiesen, dass ein Drucksensor in der Pneumatikanlage vorgesehen ist, mittels dem bevorzugte Druckamplituden überwachbar sind. Der Drucksensor kann an unterschiedlichen Stellen angebracht sein. Insbesondere hat es sich als vorteilhaft erwiesen, dass der Drucksensor direkt an einen Druckspeicher und/oder an eine Speicherleitung oder sonstige pneumatische Verbindungsleitung zu einem Druckmittelvorratsbehälter angeschlossen ist. Ein Drucksensor kann auch an eine Galerie angeschlossen sein, zusätzlich oder alternativ zu einem vorgenannten dem Druckspeicher zugeordneten Drucksensor. Vorteilhaft kann ein weiterer Drucksensor auch an eine Balgleitung und/oder an einen Balg direkt angeschlossen sein, um zusätzlich oder alternativ das Druckniveau einer Druckmittelkammer zu überwachen. Die Werte eines oder mehrerer Drucksensoren können nicht nur zu Überwachungszwecken, sondern insbesondere auch zu Steuer- und Regelzwecken verwendet werden; insbesondere auch zu Steuer- und Regelzwecken der Druckmittelversorgungsanlage bzw. insbesondere der Ladeanordnung, vorzugsweise einzelner Komponenten derselben, nämlich insbesondere einem Motor des Verdichters und/oder zur Steuerung und Regelung wenigstens eines Ladeventils und/oder einer Nennweiten-einstellbaren Drossel der Ladeanordnung lassen sich die Werte eines oder mehrerer Drucksensoren verwenden.

Es ist wenigstens eine Druckmittelladeleitung zwischen dem wenigstens einen Druckmittelladeanschluss und der Verdichterleitung vorgesehen. Insbesondere hat es sich als vorteilhaft erwiesen, dass eine erste Druckmittelladeleitung zwischen dem ersten Druckmittelladeanschluss und dem Eingang der zweiten Verdichterstufe vorgesehen ist. Zusätzlich oder alternativ kann eine zweite Druckmittelladeleitung zwischen dem zweiten Druckmittelladeanschluss und dem Eingang der zweiten Verdichterstufe vorgesehen sein.

Bevorzugt ist die wenigstens eine Druckmittelladeleitung und die Verdichterleitung ausgebildet, das geladene Druckmittel von dem wenigstens einen Druckmittelladeanschluss der zweiten Verdichterstufe zuzuführen, um diese weiterverdichtet über die pneumatische Hauptleitung zwischen der Druckmittelzuführung und dem Druckmittelanschluss der Pneumatikanlage zuzuführen. Insbesondere hat es sich als vorteilhaft erwiesen, Druckmittel von dem Druckmittelvorratsbehälter über einen ersten Druckmittelladeanschluss an die zweite Verdichterstufe in eine Anzahl von Druckmittelkammern zuzuführen. Zusätzlich oder alternativ kann Druckmittel von der Anzahl von Druckmittelkammern über einen zweiten Druckmittelladeanschluss über die zweite Verdichterstufe in den Druckmittelvorratsbehälter geführt werden. Im Ergebnis führt diese Weiterbildung dazu, dass bei gleichwohl effizienter Ausnutzung der Ladeanordnung Druckmittel zwischen einer Druckmittelkammer und einem Druckmittelvorratsbehälter der Pneumatikanlage hin- und hergeführt werden kann, um einen Heben-Vorgang bzw. einen Senken-Vorgang für ein Fahrzeug umzusetzen.

Vorteilhaft ist die Ansaugleitung und die Verdichterleitung ausgebildet, von dem Ansauganschluss über die erste Verdichterstufe das weitere Druckmittel zur Verfügung zu stellen und der zweiten Verdichterstufe zuzuführen, um dieses weiterverdichtet über die pneumatische Hauptleitung zwischen der Druckmittelzuführung und dem Druckmittelanschluss der Pneumatikanlage zuführen zu können. Insbesondere im Rahmen der beiden zuvor genannten Weiterbildungen ist als Kombination die gleichzeitige Zuführung von am wenigstens einen Druckmittelanschluss anstehenden geladenen Druckmittel und von der ersten Verdichterstufe zur Verfügung gestellten weiteren Druckmittels zur zweiten Verdichterstufe vorgesehen. Insbesondere kann die Zuführung frei von einem in Gegenführungsrichtung wirkenden Rückhaltedruck --wie er im Stand der Technik beispielsweise durch ein Rückhalteventil oder sonstigen Sperrmitteln oder Wegeventil oder sonstigen Regelmittel bewusst vorgesehen ist-- gebildet sein. Dies ist vorteilhaft einer vollständigen Ausnutzung der Förderleistung mindestens einer ersten und zweiten Verdichtungsstufe eines zwei- oder mehrstufigen Verdichters zuträglich. Insbesondere im Rahmen der vorgenannten Weiterbildung wurde erkannt, dass es weitaus effektiver ist, den Verdichter hinsichtlich seiner Förderleistung vollständig zu nutzen und stattdessen das Druckmittel in flexibler und schnell verfügbarer Weise vorzuhalten, beispielsweise in dem Druckmittelvorratsbehälter und/oder den Druckkammern sowie dem erläuterten Konzept einer gleichzeitigen und rückhaltdruckfreien Hin- und Her-Speicherungsmöglichkeit. Grundsätzlich kommt damit ein oben genannter Boostbetrieb weitaus häufiger als Betriebsoption in Frage, aufgrund einer ausreichend zur Verfügung stehenden Menge an Druckmittel. Vorteilhaft muss ein Boostbetrieb nicht wegen eines abnehmenden oder gar zu geringen Speicherdrucks gezielt beendet werden; eine solche Maßnahme ist mit einigem messtechnischem Aufwand verbunden. Vielmehr hat es sich gezeigt, dass mit einem hier beschriebenen Konzept oder einer Weiterbildung desselben ein erforderlicher Druckmittelstrom selbst für einen Boostbetrieb infolge des zur Verfügung gestellten, insbesondere hinzugeförderten, weiteren Druckmittels aus einer ersten Verdichterstufe zusätzlich zu einem geladenen Druckmittel weitgehend aufrecht erhalten werden kann, jedenfalls aber einer Reduktion desselben in einem Grossteil der Betriebsfälle wirksam entgegengewirkt werden kann.

Besonders bevorzugt ist, dass für eine mittels der Pneumatikanlage bewirkten Senken-Vorgang die Druckmittelversorgungsanlage wahlweise offen, teilgeschlossen oder geschlossen betrieben wird. Ein offener Betrieb kann unter Ablassen von Druckmittel, insbesondere direkt, d.h. über den Druckmittelanschluss und die pneumatische Hauptleitung ggf. unter Regeneration des Lufttrockners, in den Entlüftungsanschluss erfolgen. Ein geschlossener Betrieb kann unter Ablassen von Druckmittel aus einer Druckmittelkammer in den Druckmittelvorratsbehälter über den Verdichter unter Führen von am wenigstens einen Druckmittelladeanschluss anstehenden geladenen Druckmittels und unter Führen von der ersten Verdichterstufe zur Verfügung gestellten weiteren Druckmittels in Führungsrichtung zur zweiten Verdichterstufe erfolgen. Ein teilgeschlossener Betrieb kann unter Beteiligung beider vorgenannter Betriebsarten erfolgen in beliebiger Reihenfolge nacheinander oder wenigstens zeitweise gleichzeitig. Insbesondere erfolgt ein teilgeschlossener Betrieb unter Ablassen von Druckmittel aus einer Druckmittelkammer in den Entlüftungsanschluss und aus einer Druckmittelkammer in den Druckmittelvorratsbehälter in beliebiger Reihenfolge nacheinander oder wenigstens zeitweise gleichzeitig.

Zusätzlich oder alternativ hat es sich für ein mittels der Pneumatikanlage bewirkten Heben-Vorgangs als vorteilhaft erwiesen, die Druckmittelversorgungsanlage wahlweise offen, teilgeschlossen oder geschlossen zu betreiben. Insbesondere kann dazu Druckmittel in den Druckmittelanschluss gefördert werden. Dies kann außerhalb eines Boostbetriebs unter Betrieb der ersten und zweiten Verdichterstufe, d. h. unter Nutzung des weiteren Druckmittels erfolgen. Im offenen Betrieb wird Druckmittel aus der Atmosphäre in den Druckmittelanschluss über den Verdichter gefördert. Im geschlossenen Betrieb kann dies unter Ablassen von Druckmittel aus einem Druckmittelvorratsbehälter in eine Druckmittelkammer über eine Galerie erfolgen. Ein teilgeschlossener Betrieb kann unter Beteiligung beider vorgenannter Betriebsarten erfolgen in beliebiger Reihenfolge nacheinander oder wenigstens zeitweise gleichzeitig. Insbesondere kann dies unter Führen von am wenigstens einen Druckmittelladeanschluss anstehenden geladenen Druckmittels aus dem Druckmittelvorratsbehälter oder mindestens einer Druckmittelkammer und von der ersten Verdichterstufe zur Verfügung gestellten weiteren Druckmittels in Führungsrichtung zur zweiten Verdichterstufe nacheinander oder wenigstens zeitweise gleichzeitig erfolgen.

Verkürzt dargestellt wird bei einem teilgeschlossenen Senken-Vorgang Druckmittel von einer Druckmittelkammer in einen Druckmittelvorratsbehälter überführt mittels des Verdichters und insbesondere zusätzlich Druckmittel mittels zumindest einer Verdichterstufe des Verdichters, insbesondere der ersten Verdichterstufe, aus der Atmosphäre in den Druckmittelvorratsbehälter überführt. Verkürzt dargestellt wird bei einem teilgeschlossenen Heben-Vorgang Druckmittel von einem Druckmittelvorratsbehälter in eine Druckmitelkammer überführt mittels des Verdichters und insbesondere zusätzlich Druckmittel mittels zumindest einer Verdichterstufe des Verdichters, insbesondere der ersten Verdichterstufe, aus der Atmosphäre in mindestens eine Druckmittelkammer überführt. Vorteilhaft hat sich gezeigt, dass im Rahmen eines teilgeschlossenen Heben-Vorgangs und/oder Senken-Vorgangs ein Entlüftungsvorgang in den Entlüftungsanschluss erfolgen kann unter Regeneration eines Trockners in der pneumatischen Hauptleitung. Vorteilhaft ist infolge des hier beschriebenen Konzepts ein Druckvolumen der Druckluft der Pneumatikanlage jedoch selbst dann identisch oder praktisch gleich wie vor einem Heben-Vorgang und/oder Senken-Vorgang.

Es hat sich insbesondere gezeigt, dass der Betrieb der Druckmittelversorgungsanlage optimiert werden kann unter Abgleich der Druckniveaus wie sie in wenigstens einer Ladezweigleitung im Vergleich zu einer Verdichterleitung vorliegen. Insbesondere können pneumatische Mittel vorgesehen sein, in wenigstens einer Druckmittelladeleitung der Druckmittelversorgungsanlage, um das unterschiedliche Druckniveau zwischen einem Ausgang der ersten Verdichterstufe einerseits und einem Druckmittelvorratsbehälter bzw. einer Druckmittelkammer andererseits zu berücksichtigen.

So hat es sich als besonders vorteilhaft erwiesen, dass eine erste Druckmittelladeleitung zwischen einem ersten Druckmittelladeanschluss und der Verdichterleitung eine erste Drossel und/oder eine zweite Druckmittelladeleitung zwischen einem zweiten Druckmittelladeanschluss und der Verdichterleitung eine zweite Drossel aufweist. Vorteilhaft hat sich erwiesen, dass eine erste Drossel und/oder eine zweite Drossel eine Nennweite haben, die ausgebildet ist, eine Druckabsenkung in der ersten und/oder zweiten Druckmittelladeleitung gegenüber der Verdichterleitung zu bewirken. Auf diese Weise können die höheren Druckniveaus eines Druckmittelvorratsbehälters bzw. einer Druckmittelkammer gedrosselt werden auf das Druckniveau in einer Verdichterleitung, insbesondere einem Druckniveau am Ausgang der ersten Verdichterstufe und/oder am Eingang der zweiten Verdichterstufe. Dies hat beim Betrieb der zweiten Verdichterstufe unter anderem den Vorteil, dass infolge der Druckabsenkung des Drucks in dem Druckmittelvorratsbehälter oder mindestens einer der Druckmittelkammern ein Stromverbrauch in Grenzen gehalten wird. In dieser Weiterbildung wird die nachhaltige Erzeugung und Bevorratung des Druckmittels unter effizientem Betrieb beider bzw. aller Verdichterstufen kombiniert mit einer sparsamen Betriebsweise des Verdichters. Dies unterstützt auch einen vergleichsweise sparsamen Betrieb der ersten Verdichterstufe, wobei die Druckmittelförderleistung der ersten Verdichterstufe gleichwohl dem Konzept der Erfindung folgend, effizient genutzt wird, anstatt auf dieses zu verzichten. Zudem wird ein Boostbetrieb ohne oder mit jedenfalls gering gehaltenen Druckmittelverlusten in der Druckmittelversorgungsanlage möglich, und damit häufiger möglich.

So hat es sich beispielsweise als vorteilhaft erwiesen, dass eine Nennweite der ersten und/oder zweiten Drossel ausgebildet ist, eine Druckabsenkung mit einer Amplitude zwischen einem Drittel und einer Hälfte eines Drucks in der ersten und/oder zweiten Druckmittelladeleitung zum Eingang der zweiten oder weiteren Verdichterstufe des Verdichters zu bewirken. Insbesondere eine Amplitude im Bereich zwischen 8 bis 10 bar hat sich als vorteilhaft erwiesen im Hinblick auf eine vorteilhafte Druckmittelversorgungsanlage bzw. ein vorteilhaftes pneumatisches System. Insbesondere kann die Druckabsenkung von einem Bereich zwischen 15-25 bar in einen Bereich zwischen 5-15 bar bewirkt werden, insbesondere geregelt oder ungeregelt mittels einer Nennweite einer ersten und/oder zweiten Drossel. Speziell hat sich eine Nennweite im Bereich zwischen 0,5 bis 1,5 mm, insbesondere im Bereich zwischen 0,6 und 0,8 mm erwiesen. Auch dazwischen liegende Nennweiten wie beispielsweise im Bereich zwischen 0,6 und 1,2 mm haben sich als vorteilhaft erwiesen. Die Nennweite kann fest oder einstellbar sein. Insbesondere eine einstellbare Nennweite hat sich als vorteilhaft erwiesen, da in dem Fall eine Nennweitenanpassung erfolgen kann, beispielsweise in Abhängigkeit von einem Druck in der ersten und/oder zweiten Druckmittelladeleitung oder einem Steuersignal. Ein Druck in der Druckmittelladeleitung ist vorteilhaft an oder zwischen einem Druckmittelladeanschluss und einer Drossel messbar, kann aber auch an oder zwischen einem Druckmittelladeanschluss und einem Druckmittelvorratsbehälter und/oder einer Druckmittelkammer erfolgen. Auch kann eine einstellbare Nennweite in Abhängigkeit von einer Leistungsaufnahme des Verdichters, insbesondere eines Motors des Verdichters, erfolgen. Diese und andere Nennweiten-Steuerungs- oder Regelungs-Maßnahmen können einen weitgehend gleichmäßigen --konkret gleichmäßig ausgelasteten-- Betrieb des Verdichters, d. h. insbesondere mit gleichmäßiger Stromaufnahme in einem bevorzugten Strom-bzw. Leistungsbereich ermöglichen. Dies unterstützt die effiziente und damit auch nachhaltig und lebensverlängernde Betriebsweise des Verdichters.

Grundsätzlich kann die Steuerung von geladenem Druckmittel, welches an dem wenigstens einen Druckmittelladeanschluss ansteht mit geeigneten pneumatischen Steuermitteln erfolgen. Insbesondere hat es sich als vorteilhaft erwiesen, dass an einem ersten Druckmittelanschluss ein erstes Ladeventil und/oder an einem zweiten Druckmittelanschluss ein zweites Ladeventil angeschlossen ist oder anschließbar ist. Ein Ladeventil, insbesondere in Form eines Wegeventils, bevorzugt in Form eines in zwei Schaltzustände schaltbaren Wegeventils wie beispielsweise eines 2/2-Wegeventils, hat sich als vorteilhaft erwiesen. Ein Ladeventil kann in der Druckmittelversorgungsanlage und/oder in der Pneumatikanlage vorgesehen sein. So kann beispielsweise eine erste Druckmittelladeleitung der Druckmittelversorgungsanlage zwischen einem ersten Druckmittelladeanschluss und der Verdichterleitung ein erstes Ladeventil und/oder eine zweite Druckmittelladeleitung zwischen einem zweiten Druckmittelladeanschluss und der Verdichterleitung ein zweites Ladeventil aufweisen. Zusätzlich oder alternativ kann an eine erste Druckmittelladeleitung zwischen einem ersten Druckmittelladeanschluss und einem Druckmittelvorratsbehälter ein erstes Ladeventil anschließbar sein bzw. angeschlossen sein in der Pneumatikanlage oder zwischen der Druckmittelversorgungsanlage und der Pneumatikanlage.

Zusätzlich oder alternativ kann an eine zweite Druckmittelladeleitung zwischen einem zweiten Druckmittelladeanschluss und mindestens einer Druckmittelkammer ein zweites Ladeventil anschließbar sein bzw. in der Pneumatikanlage angeschlossen sein oder zwischen der Druckmittelversorgungsanlage und der Pneumatikanlage angeschlossen sein.

Durch Öffnen oder Schließen eines Ladeventils lässt sich somit vorgehaltenes und bei Bedarf in die zweite Verdichterstufe ladbares Druckmittel dem Druckmittelvorratsbehälter und/oder der Druckmittelkammer entnehmen; gemäß dem Konzept kann dieses geladene Druckmittel, wie es an wenigstens einem Druckmittelanschluss ansteht, gleichzeitig mit von der ersten Verdichterstufe zur Verfügung gestellten weiteren Druckmittels zur zweiten Verdichterstufe geführt werden. Grundsätzlich erweist sich das Konzept sowohl für einen Hebenals auch für einen Senken-Vorgang als vorteilhaft jedenfalls im geschlossenen oder teilweise geschlossenen Betrieb der Druckmittelversorgungsanlage; die vorgenannten Betriebarten können allein oder in beliebiger zeitlicher Kombination mit eine offenen Betriebsart, insbesondere Entlüftung in die Atmosphäre bzw. einen Entlüftungsanschluss erfolgen.

Die Trennung eines Druckmittelvorratsbehälters und einer Anzahl von Druckmittelkammern hat sich als vorteilhaft zur Führung des geladenen Druckmittels erwiesen. Insbesondere kann in der Pneumatikanlage ein Trennventil vorgesehen sein, um Druckmittelvorratsbehälter und Druckmittelkammern zu trennen.

Die Schaltung eines Entlüftungsventils kann grundsätzlich je nach Bedarf und auf unterschiedliche Weise erfolgen; beispielsweise kann ein einzelnes direkt schaltbares Entlüftungsventil als auch eine Entlüftungsventilanordnung mit einem Entlüftungsventil in der Entlüftungsleitung vorgesehen sein. Besonders vorteilhaft hat sich eine Magnetventilanordnung erwiesen, die ein Steuerventil zur Steuerung des Entlüftungsventils aufweist. Besonders vorteilhaft hat sich auch eine pneumatische Hauptleitung erwiesen, die ein entsperrbares Rückschlagventil aufweist, das mittels des Steuerventils entsperrbar ist. Besonders vorteilhaft kann das Steuerventil zur Steuerung des Entlüftungsventils und Entsperrung des entsperrbaren Rückschlagventils ausgebildet sein. Mit Vorteil lässt sich so über ein einziges Steuerventil der Trockner beidseitig öffnen, indem das Rückschlagventil entsperrt wird und das Entlüftungsventil geöffnet wird. Dies ist einer schnellen Befüllung der Pneumatikanlage als auch vollständigen Regeneration des Trockners zuträglich. Insbesondere hat es sich dazu als vorteilhaft erwiesen, dass ein Steuerventil mit einem Ventilanschluss in einer an einem Drucksteueranschluss des Entlüftungsventils angeschlossenen pneumatischen Steuerleitung angeschlossen ist. Das Steuerventil ist ausgebildet, ein Drucksteueranschluss bei geöffnetem Ventilanschluss des Entlüftungsventils in der Entlüftungsleitung und entsperrtem Rückschlagventil unter Steuerdruck zu halten. Besonders vorzugsweise kann das Steuerventil zwei Ventilanschlüsse aufweisen, die in der Steuerleitung angeschlossen sind, wobei das Steuerventil in Form eines 3/2-Wegeventils gebildet ist, das einen Ventilanschluss zur Umgehung aufweist und die Steuerleitung von der pneumatischen Hauptleitung abzweigt.

Die Wegeventile der Pneumatikanlage lassen sich vorteilhaft zusammen mit dem Trennventil in einem oder mehreren Ventilblöcken organisieren. Es hat sich gezeigt, dass eine kompakte Ventilblockung unter Einbindung des Trennventils vorteilhaft ist. Insbesondere kann eine an sich bekannte kompakte Ventilblockung im Rahmen des Konzepts in neuer Verwendung und damit ohne weiteren Fertigungsaufwand genutzt werden.

Grundsätzlich lässt sich das Konzept der Erfindung in unterschiedlichsten Ausführungsformen realisieren, von denen einige in der Zeichnung konkret erläutert sind.

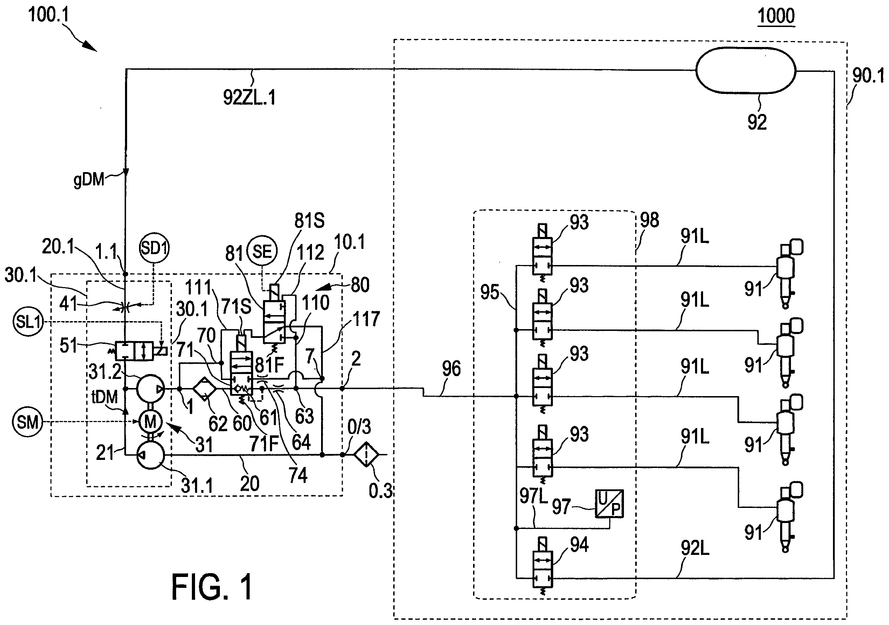

Im Rahmen einer besonders bevorzugten Weiterbildung, die beispielhaft anhand einer in Fig. 1 gezeigten Ausführungsform erläutert ist, ist eine Ladezweigleitung direkt an einen Druckmittelvorratsbehälter angeschlossen und führt zu einem ersten Druckmittelladeanschluss, der diese an eine Druckmittelladeleitung zur Verdichterleitung der Druckmittelversorgungsanlage anbindet.

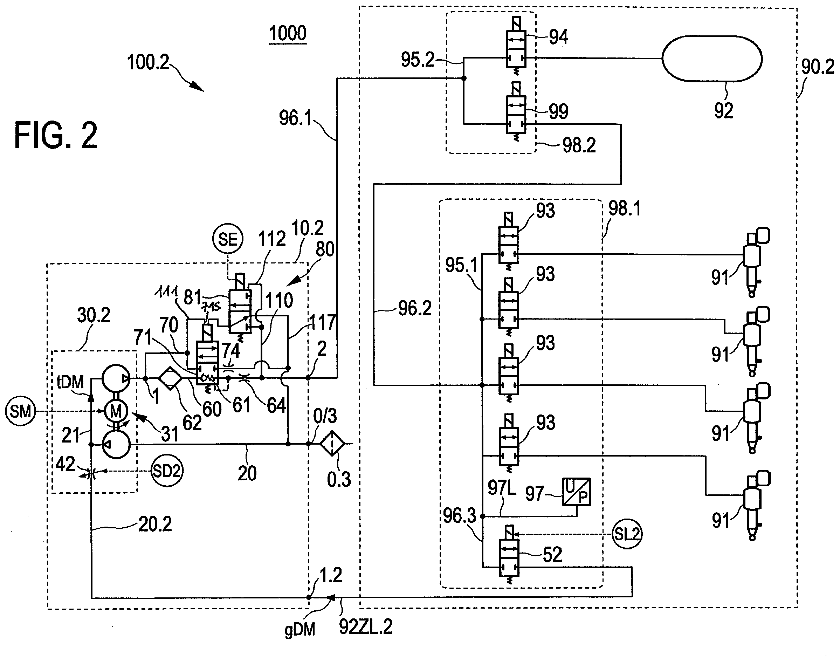

In einer zweiten anhand der Ausführungsform in Fig. 2 beispielhaft erläuterten Weiterbildung ist vorgesehen, dass eine Ladezweigleitung als Verbindungsleitung zu einer Galerie der Pneumatikanlage ausgebildet ist und zu einem zweiten Druckmittelladeanschluss führt, der diese an eine zweite Druckmittelladeleitung der Druckmittelversorgungsanlage und über diese an die Verdichterleitung anbindet. Bevorzugt ist in dieser Verbindungsleitung zur Galerie das zweite Ladeventil in der Pneumatikanlage angeschlossen. Grundsätzlich kann das zweite Ladeventil jedoch auch in der zweiten Druckmittelladeleitung der Druckmittelversorgungsanlage angeordnet sein, insbesondere als Teil der Ladeanordnung.

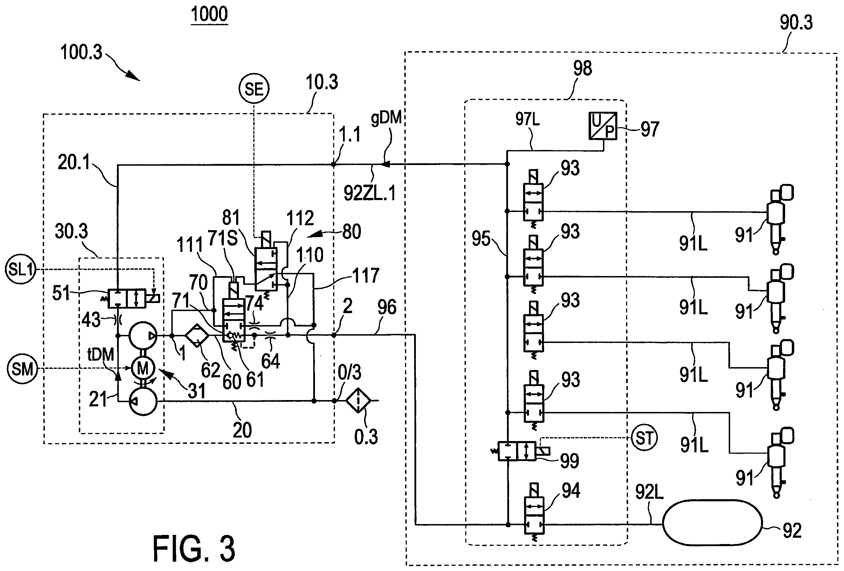

Im Rahmen einer anhand der Ausführungsform der Fig. 3 beispielhaft erläuterten vereinfachten dritten Weiterbildung kann die Ladezweigleitung wiederum als Verbindungsleitung zur Galerie vorgesehen sein, wobei ein erstes Ladeventil in der ersten Druckmittelladeleitung zwischen erstem Druckmittelladeanschluss und Verdichterleitung vorgesehen ist. Dies ermöglicht einen vergleichsweise kompakten Aufbau. Dagegen ermöglicht die zweite vorgenannte Weiterbildung die vorteilhafte Verwendung von bestehenden Ventilblöcken unter Bildung einer ersten Speichergalerie und einer zweiten Federgalerie in separaten Ventilblöcken.

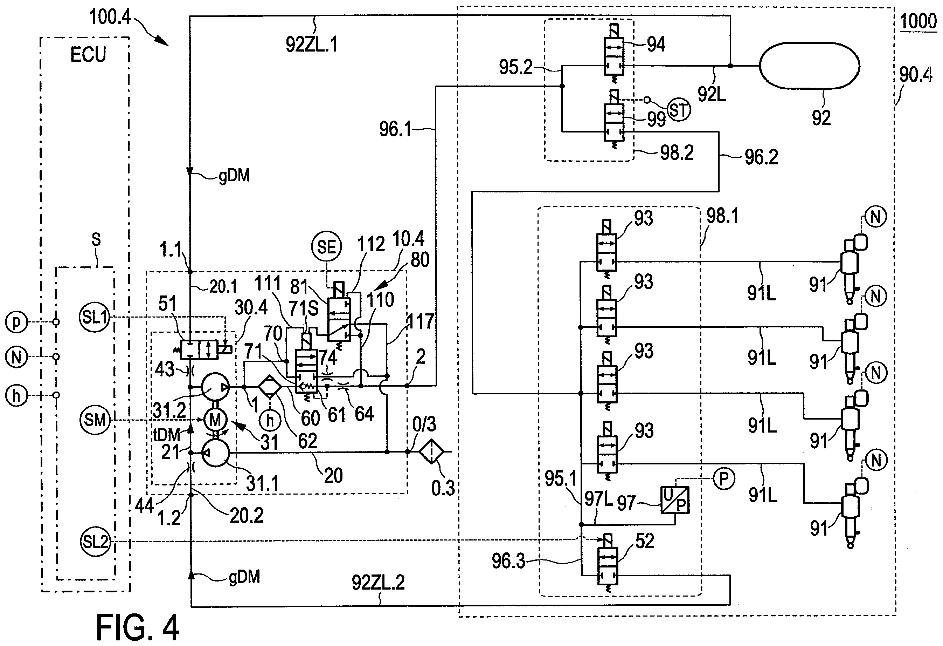

In einer vierten Weiterbildung, die anhand der in Fig. 4 beispielhaft erläuterten Ausführungsform erläutert ist, können insbesondere die Konzepte der ersten bzw. zweiten Weiterbildung einerseits und der dritten Weiterbildung andererseits miteinander kombiniert werden, nämlich indem eine erste Ladezweigleitung abzweigend von einer Speicherleitung zu einem ersten Druckmittelanschluss führt und eine zweite Ladezweigleitung abzweigend von einer Galerie zu einem zweiten Druckmittelanschluss führt. In dem Fall ist eine erste und eine zweite Druckmittelladeleitung mit einem ersten bzw. zweiten Druckmittelladeanschluss der Druckmittelversorgungsanlage vorgesehen. Fig. 4 zeigt dazu die Anordnung eines ersten Ladeventils in der ersten Druckmittelladeleitung und eines zweiten Ladeventils in der zweiten Ladezweigleitung. Grundsätzlich können auch Varianten der Anordnung der Ladeventile vorgesehen sein. Beispielsweise kann das erste Ladeventil in der ersten Ladezweigleitung angeordnet sein und das zweite Ladeventil kann in der zweiten Druckmittelladeleitung der Druckmittelversorgungsanlage angeordnet sein. Es ist auch möglich, das erste und zweite Ladeventil jeweils in der ersten und zweiten Ladezweigleitung anzuordnen oder das erste und zweite Ladeventil in der ersten bzw. zweiten Druckmittelladeleitung der Druckmittelversorgungsanlage anzuordnen. Es versteht sich, dass die Anordnungsvarianten der Ladeventile auch für die vorgenannte Anordnung der ersten und zweiten Drossel analog gilt. Insbesondere hat es sich als besonders vorteilhaft erwiesen, dass eine erste Drossel als Teil des ersten Ladeventils und/oder eine zweite Drossel als Teil des zweiten Ladeventils realisiert ist. Insbesondere kann eine Drossel bei Bestromung eines Ladeventils in einem eingeschalteten, d. h. bestromten offenen Zustand des Ladeventils wirksam werden. In dem Fall ist eine vorgenannte Drossel in den bestromt offenen Zustand des Ladeventils integriert.

Es ist zu verstehen, dass --während die hier erläuterten Ladeventile als stromlos geschlossene Wegeventile beschrieben sind und die hier erläuterten Balg- und Speicherventile als stromlos geschlossene Wegeventile beschrieben sind-dennoch die Wegeventile auch als stromlos offene Wegeventile realisiert sein können, so dass deren Bestromung abgestimmt ist auf die Funktionalität gemäß dem beschriebenen Konzept.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Identische oder ähnliche Teile oder Teile identischer oder ähnlicher Funktion sind, dort wo sinnvoll der Einfachheit halber mit einem gleichen Bezugszeichen versehen. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt im Einzelnen in:
- Fig. 1: ein Schema zur Darstellung einer ersten Ausführungsform eines pneumatischen Systems mit Druckmittelversorgungsanlage und Pneumatikanlage;
- Fig. 2: ein Schema zur Darstellung einer zweiten Ausführungsform eines pneumatischen Systems einer Druckmittelversorgungsanlage und einer Pneumatikanlage;
- Fig. 3: ein Schema zur Darstellung einer dritten Ausführungsform eines pneumatischen Systems einer Druckmittelversorgungsanlage und einer Pneumatikanlage;
- Fig. 4: ein Schema zur Darstellung einer vierten Ausführungsform eines pneumatischen Systems aus Druckmittelversorgungsanlage und einer Pneumatikanlage;
- Fig. 5: ein Ablaufdiagramm zur Darstellung einer besonders bevorzugten Ausführungsform eines Senken-Vorgangs wahlweise in einer offenen, geschlossenen oder teilweise geschlossenen Betriebsart der Druckluftversorgungsanlage;
- Fig. 6: ein Ablaufdiagramm zur Darstellung einer besonders bevorzugten Ausführungsform eines Heben-Vorgangs in einer offenen, geschlossenen oder teilgeschlossenen Betriebsart, wobei ein Heben-Vorgang unter Verdichterbetrieb, unter Verdichter- und Speichereinbindung, als auch ein besonders bevorzugter Heben-Vorgang, zunächst eine offene Betriebsart und dann eine teilgeschlossene Betriebsart der Ladeanordnung nutzt;
- Fig. 7: eine beispielhafte Darstellung eines Verlaufs eines Speicherdrucks zur Darstellung eines Drucks eines Druckmittelvorratsbehälters als Ergebnis des Betriebs einer Ladeanordnung unter gleichzeitiger Führung sowohl von am wenigstens einen Druckmittelanschluss anstehendem geladenen Druckmittel als auch von von der ersten Verdichterstufe zur Verfügung gestelltem weiteren Druckmittel zur zweiten Verdichterstufe am Beispiel einer Heben- und Senken-Sequenz im teilgeschlossenen Betrieb einer Druckmittelversorgungsanlage - dies zur Realisierung eines zusätzlichen Speicherdrucks;
- Fig. 8: eine zeitlich beliebig wiederholbar Abfolge von Heben- und Senken-Sequenzen, leicht abgewandelt zu der in Fig. 7 - dies unter Realisierung einer konstanten Periodenzeit der Hebe- und Senken-Sequenzen;

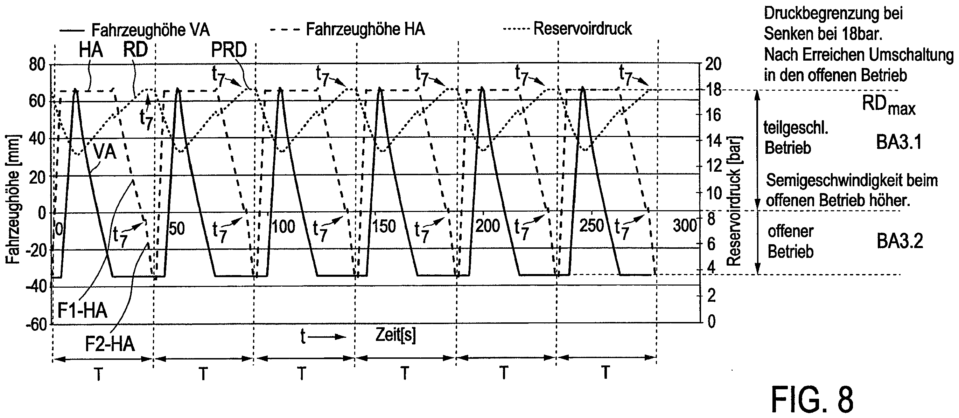

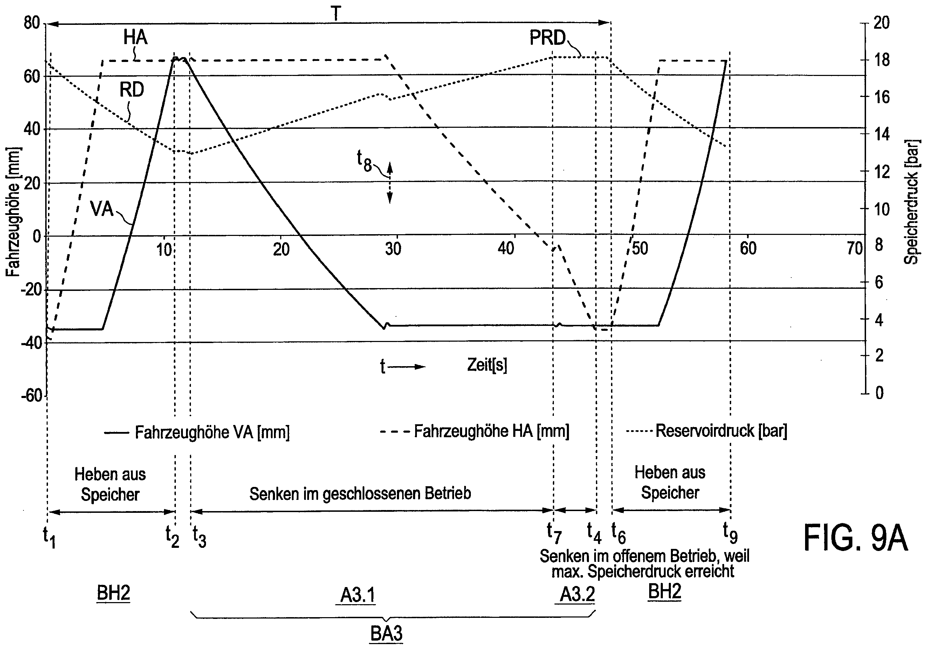

- Fig. 9A: eine vergrößerte Darstellung eines Speicherdrucks für eine Heben- und Senken-Sequenz im teilgeschlossenen Betrieb, der Fig. 8, wobei ein möglicher Speicherüberdruck durch einen ggf. von einer gewählten Drossel-Nennweite abhängig schnellen Senken-Vorgang im offenen Betrieb abgebaut werden kann, insbesondere um eine Periodenzeit des Heben- und Senken-Betriebs konstant zu halten und/oder eine Wiederholbarkeit eines Heben- und Senken-Betriebs anpassbar zu gestalten oder aber das mittels offenen Betriebs in die Atmosphäre abzulassende Druckmittel zur gezielten Regeneration eines Trockners beim Ablassen zu nutzen;
- Fig. 9B: vergleichsweise zu Fig. 9A eine Heben-Senken-Sequenz im offenen Betrieb, wobei ein Speicher nach einer Heben-Senken-Sequenz entleert ist.

Fig. 1 zeigt ein pneumatisches System 100.1 mit einer Druckluftversorgungsanlage 10.1 sowie einer Pneumatikanlage 90.1 in Form einer Luftfederanlage für ein nicht weiter dargestelltes Fahrzeug 1000 mit einer Vorderachse VA und einer Hinterachse HA. In dem Fahrzeug 1000 können eine Fahrzeugsteuerung ECU und ein Datenbus wie z. B. ein CAN-Bus od. dgl. vorgesehen sein. Insbesondere können darüber vermittelte geeignete Steuersignale --insbesondere Steuerströme zur Bestromung von Magnetspulen der elektrisch steuerbaren Ventile des pneumatischen Systems 100.1 oder eines Motors M eines Verdichters 31-- zur Verfügung gestellt werden; diese sind soweit sinnvoll im Einzelnen in Fig. 1, Fig. 2 und Fig. 3 strichpunktiert gezeigt und in Fig. 4 ausführlicher mit dem Fahrzeugsteuergerät ECU. Zur Realisierung einer Federung bzw. Niveauänderung eines Fahrzeugaufbaus --beispielsweise mit der Vorderachse VA und der Hinterachse HA-- sieht die Pneumatikanlage 90.1 hier eine Anzahl von vier Bälgen 91 vor, wobei jeder Balg 91 ein Teil einer nicht näher bezeichneten Luftfeder ist. Einem Balg 91 ist jeweils ein Balgventil 93 in Form eines Wegeventils, nämlich hier ein ansteuerbares Magnet-2/2-Wegeventil, in einer Balgleitung 91L vorgeschaltet. Die Balgleitungen 91L zweigen jeweils in Form einer Zweigleitung von einer eine Sammelleitung bildenden Galerie 95 ab, die wiederum an eine weitere pneumatische Verbindungsleitung 96 angeschlossen ist. Die weitere pneumatische Verbindungsleitung 96 schließt an den Druckmittelanschlusshier auch als Druckluftanschluss 2 bezeichnet-- der Druckluftversorgungsanlage 10.1 an. Insgesamt wird vorliegend Druckmittel beispielhaft als Druckluft bezeichnet, ohne dass dies einschränkend für die Wahl eines anderen Druckmittels ist.

Die Pneumatikanlage 90.1 weist außerdem einen über eine Speicherleitung 92L an die Galerie 95 angeschlossenen Druckspeicher 92 auf, dem ein Speicherventil 94, hier in Form eines steuerbaren Magnet-2/2-Wegeventils, vorgeschaltet ist. An die Galerie 95 ist vorliegend über eine Drucksensorleitung 97L ein Drucksensor 97 angeschlossen, der über eine Spannungs-/Druck-Umsetzung U/P zur Messung eines Speicherdrucks im Druckspeicher 92 als auch eines Balgdrucks im Balg 91 geeignet ist. Dazu wird z. B. nur das Speicherventil 94 geöffnet bzw. nur ein Balgventil 93 geöffnet. Alle Magnet-2/2-Wegeventile, nämlich die vier Balgventile 93 und das eine Speicherventil 94, sind vorliegend in einem einzigen 5-fach-Ventilblock 98 als Baueinheit kombiniert.

Über den Druckluftanschluss 2 und die daran angeschlossene pneumatische Hauptleitung 60 der Druckluftversorgungsanlage 10.1 bzw. die weitere Pneumatische Verbindungsleitung 96 können Bälge 91 und Speicher 92 über die Galerie 95 befüllt werden oder in umgekehrter Richtung entlüftet werden.

Die Druckluftversorgungsanlage 10.1 weist im Einzelnen eine Ansaugleitung 20 zu einer Ladeanordnung 30.1 auf, die zwischen einem Ansauganschluss 0 zur Umgebung und einem Verdichter 31 der Ladeanordnung verläuft; nämlich vorliegend zwischen einem Filterelement 0.3 vor dem Ansauganschluss 0 und einem Eingang einer ersten Verdichterstufe 31.1 des Verdichters 31. Der Verdichter 31 weist die erste Verdichterstufe 31.1 und eine zweite Verdichterstufe 31.2 sowie einen Motor M zum Antrieb derselben auf; d.h. der Motor M treibt einen oder mehrere Verdichterkolben an, der bzw. die sich in einer nicht näher bezeichneten Verdichterkammer einer Verdichterstufe unter Verdichtung von Druckmittel, d.h. vorliegend Luft in der ersten Verdichterstufe und die so bereits teilverdichtete und dann in der zweiten Verdichterstufe weiter verdichtete Druckluft bewegt.

An einem symbolisch bezeichneten Ausgang der ersten Verdichterstufe 31.1 schließt eine Verdichterleitung 21 zwischen der ersten Verdichterstufe 31.1 und der zweiten Verdichterstufe 31.2 an, nämlich zwischen dem Ausgang der ersten Verdichterstufe 31.1 und dem Eingang der zweiten Verdichterstufe 31.2. Der Verdichter 31 ist mit dem symbolisch bezeichneten Ausgang der zweiten Verdichterstufe 31.2 druckmittelzuführungsseitig an eine Druckmittelzuführung 1 angeschlossen über die Druckmittel einer pneumatischen Hauptleitung 60 zuführbar und am Druckmittelanschluss 2 zur Verfügung stellbar ist. Das Druckmittel wird über einen in der pneumatischen Hauptleitung 60 angeordneten Trockner 62 für das Druckmittel, nämlich wie vorliegend regelmäßig Druckluft, geführt. Zwischen der Druckluftzuführung 1 und dem Druckluftanschluss 2 schließt hier direkt an der Druckluftzuführung 1 auch eine Entlüftungsleitung 70 an, die über ein Entlüftungsventil 71 zum Entlüftungsanschluss 3 führt. Das Entlüftungsventil 71 ist Teil einer Magnetventilanordnung 80 zu der auch ein als Magnetwegeventil ausgebildetes Steuerventil 81 und vorliegend ein entsperrbares Rückschlagventil 61 gehört. Das entsperrbare Rückschlagventil 61 und das Entlüftungsventil 71 sind vorliegend über einen einzigen Steuerkolben aktuierbar, der über einen Drucksteueranschluss 71S als Relaiskolben bewegbar ist. Dem Drucksteueranschluss 71S ist ein geeigneter Steuerdruck über das Steuerventil 81 zuführbar. Vorliegend ist der Steuerdruck ein über das Steuerventil 81 geschalteter von der pneumatischen Hauptleitung 60 am Zweiganschluss 63 in eine Steuerleitung abgezweigter Steuerdruck. Das Steuerventil 81 ist vorliegend als ein 3/2-Wegeventil gebildet. In dem in Fig. 1 gezeigten stromlosen Zustand ist die Steuerleitung 110 mit einem ersten Teil und einem zweiten Teil gebildet, die durch das Steuerventil 81 pneumatisch getrennt sind. Der erste Teil geht vom Zweiganschluss 63 ab; der zweite Teil führt zum Drucksteueranschluss 71S. Das 3/2-Wegeventil befindet sich in der gezeigten Form hinsichtlich der Steuerleitung 110 in einem stromlosen Zustand, der die vorgenannten ersten und zweiten Teile pneumatisch trennt. Der zweite Teil ist auch zu einer weiteren Entlüftungsleitung 117 entlüftet, wobei die weitere Entlüftungsleitung 117 an einem Zweiganschluss 7 mit der Entlüftungsleitung 70 zusammengeführt ist; beide Entlüftungsleitungen 117 und 70 sind zum Entlüftungsanschluss 3 als gemeinsamen Entlüftungsleitung 70 weitergeführt, sowie im letzten Teil identisch mit einem Teil der Ansaugleitung 20.

Eine erste weitere Steuerleitung 111 bzw. eine zweite weitere Steuerleitung 112 ist direkt auf den Kolben des Entlüftungsventils 71 bzw. den Kolben des Steuerventils 81 geführt und zweigt jeweils von der Entlüftungsleitung 70 bzw. der Steuerleitung 110 ab. Im Ergebnis führt dies zu einer schnelleren Schalttätigkeit im Entlüftungsfalle, d. h. wenn das Steuerventil 81 bei entsprechender Bestromung der Magnetspule in den zweiten bestromten Schaltzustand beschleunigt übergeht, ist der Relaiskolben des Entlüftungsventils 71 bereits gegen die Federkraft der Ventilfeder 71F bzw. 81F vorgespannt. Wird der Steuerkolben 71S des Entlüftungsventils bewegt, geht das Entlüftungsventil 71 in den aktuiert offenen Zustand über und gleichzeitig wird das Rückschlagventil 61 pneumatisch entsperrt. Im Ergebnis wird der in der pneumatischen Hauptleitung 60 vorgesehene Lufttrockner 62 sowohl auf der Seite der Entlüftungsleitung 70 als auch auf der Seite des Druckluftanschlusses 2 beidseitig geöffnet.

Eine Entlüftung der Pneumatikanlage 90 erfolgt über eine erste Drossel, hier die Regenerations-Drossel 64, in der pneumatischen Hauptleitung 60 und eine zweite Drossel, hier die Entlüftungs-Drossel 74, in der Entlüftungsleitung 70. Eine Nennweite der Regenerations-Drossel 64 ist im vorliegenden Ausführungsbeispiel größer als eine Nennweite der Entlüftungs-Drossel 74, um einerseits eine effiziente Entlüftung unter Vermeidung einer zu hohen Schall- bzw. Druckamplitude bei bestmöglicher Regeneration des Lufttrockners 62 zu ermöglichen.

Die grundsätzliche Ausführung der oben beschriebenen entlüftungsrelevanten Funktionalität der Druckluftversorgungsanlage 10.1 bzw. der pneumatischen Hauptleitung 60 und Ansaugleitung 20 ist für die vorliegend gewählten Ausführungsbeispiele der Fig. 1 bis Fig. 4 identisch. Insbesondere die obige Beschreibung dieses Teils sowie die Beschreibung der wesentlichen Teile der Pneumatikanlage 90.1 ist für alle Fig. identisch. Dies betrifft auch die Bezugszeichen, die in den folgenden Fig. 2, Fig. 3 und Fig. 4 aus Übersichtsgründen nur teilweise aufgeführt sind, aber für identische oder ähnliche Teile oder Teile identischer oder ähnlicher Funktion die gleichen sind, so dass im Einzelnen auf die obige Beschreibung in Bezug auf alle Fig. 1 bis Fig. 4 verwiesen wird. Gleichwohl ist zu verstehen, dass die als Entlüftungsventilanordnung dienende Magnetventilanordnung 80 auch in abgewandelter Form ausgeführt werden kann. Insbesondere kann in der Entlüftungsleitung 70 statt des hier gezeigten pneumatisch vorgesteuerten Entlüftungsventils 71 auch ein direkt über eine Magnetspule angesteuertes Einzelventil als Entlüftungsventil vorgesehen sein, das über einen Steuerstrom direkt ansteuerbar ist, so dass das Steuerventil 81 entfallen kann; diese Abwandlung einer Entlüftungsventilanordnung wird auch als direkt entlüftende Ventilanordnung bezeichnet. In einer anderen Abwandlung kann die Entlüftungsventilanordnung als eine sogenannte schnell entlüftende Ventilanordnung gebildet sein, bei der pneumatische Vorsteuerleitungen in einer von der hier gezeigten Ausführungsform abweichenden Weise von der pneumatischen Hauptleitung 60 abzweigen zur pneumatisch vorgesteuerten und beschleunigten Schalttätigkeit eines Entlüftungsventils.

Im Folgenden wird auf die besondere Ausführung der Ladeanordnung 30.1 Bezug genommen, die sich von den anderen Ladeanordnungen 30.2, 30.3, 30.4 der Fig. 2 bis Fig. 4 unterscheidet.

Die Ladeanordnung 30.1 der Fig. 1 ist über einen ersten Druckmittelladeanschluss 1.1 an eine erste Ladezweigleitung 92ZL.1 angeschlossen, wobei die erste Ladezweigleitung 92ZL.1 direkt an den Druckspeicher 92 angeschlossen ist. Die Ladeanordnung 30.1 umfasst eine an den ersten Druckmittelladeanschluss 1.1 anschließende erste Druckmittelladeleitung 20.1, die zu der oben erwähnten Verdichterleitung 21 führt und damit an einen Eingang der zweiten Verdichterstufe 31.2 des Verdichters 31 über die Verdichterleitung 21 anschließt. In der ersten Druckmittelladeleitung 20.1 ist eine hier nennweiteneinstellbare erste Drossel 41 sowie ein erstes Ladeventil 51 angeschlossen. Vorliegend ist die nennweiteneinstellbare erste Drossel 41 und das erste Ladeventil 51 separat in der ersten Druckmittelladeleitung 20.1 gezeigt - beide können auch in umgekehrter Reihenfolge angeordnet sein. In besonders bevorzugter Weise kann die erste Drossel 41 in dem ersten Ladeventil 51 integriert sein, nämlich in dem bestromt offenen zweiten Schaltzustand des ersten Ladeventils 51.

Ein Befüllen der Pneumatikanlage 90.1 kann unter Betrieb des zweistufigen Verdichters 31 über die pneumatische Hauptleitung 60 im Normalbetrieb, insbesondere im offenen Betrieb bei geschlossenem Ladeventil 51 und offenem Balg- und/oder Speicherventil 93, 94 unter Ansaugung von Luft über die Ansaugleitung 20 und unter zweistufiger Verdichtertätigkeit erfolgen als auch im Boostbetrieb eines Heben-Vorgangs erfolgen; im Boostbetrieb eines Heben-Vorgangs öffnet das erste Ladeventil 51 die erste Ladezweigleitung 92ZL.1 zum Speicher 92, so dass das am ersten Druckmittelladeanschluss 1.1 anstehende geladene Druckmittel gDM des Speichers 92 als auch das von der ersten Verdichterstufe 31.1 zur Verfügung gestellte weitere Druckmittel tDM zur zweiten Verdichterstufe 31.2 gleichzeitig und frei von Rückhaltedruck geführt wird; dies kann im Rahmen eines geschlossenen oder teilgeschlossenen Betriebs genutzt werden.

Im Entlüftungsfall kann bei geöffnetem Entlüftungsventil 71 und geöffnetem Balgventil 93 oder Speicherventil 94 eine Entlüftung direkt in den Entlüftungsanschluss 3 erfolgen; d. h. im offenen Betrieb.

Während die einzelnen Steuersignale bzw. Stromsignale für die Balgventile 93 und das Speicherventil 94 nicht im Einzelnen eingezeichnet sind, so kann vorliegend die Ansteuerung des ersten Ladeventils 51, des Motors M und der ersten Drossel 41 und des Steuerventils 81 über elektrische Steuersignale SL1, SM, SD1 und SE erfolgen.

Im Folgenden sind für identische oder ähnliche Teile oder Teile identischer oder ähnlicher Funktionen der Einfachheit halber gleiche Bezugszeichen verwendet.

Fig. 2 zeigt ein pneumatisches System 100.2 mit einer Pneumatikanlage 90.2 und einer Druckluftversorgungsanlage 10.2, wobei die Ausführung des Ventilblocks in der Pneumatikanlage 90.2 in Form eines ersten Ventilblocks 98.1 mit den Balgventilen 93 sowie einem zweiten Ladeventil 52 und einem zweiten Ventilblock 98.2 mit einem Speicherventil 94 und einem Trennventil 99 erfolgt. Das Trennventil 99 und das zweite Ladeventil 52 sind wie die Balgventile 93 und das Speicherventil 94 in Form einer steuerbaren Magnet-2/2-Wegeventils ausgeführt. Das zweite Ladeventil 52, der Motor M, eine zweite nennweiteneinstellbare Drossel 42 und das Entlüftungssteuerventil 81 sind über elektrische Steuersignale SL2, SM, SD2 und SE ansteuerbar. Im vorliegenden Fall wird nur auf die Unterschiede zwischen der Druckluftversorgungsanlage der Fig. 2 und der Fig. 1 eingegangen, nämlich die unterschiedliche Ausführung der Ladeanordnung 30.2.

Eine zweite Ladezweigleitung 92ZL.2 schließt vorliegend an das zweite Ladeventil 52 und den zweiten Druckmittelladeanschluss 1.2 an. In der Druckluftversorgunganlage 10.2 schließt eine zweite Druckmittelladeleitung 20.2 an den zweiten Druckmittelladeanschluss 1.2 und die Verdichterleitung 21 an. In der zweiten Druckmittelladeleitung 20.2 ist vorliegend nur eine nennweiteneinstellbare zweite Drossel 42 angeordnet, während das zweite Ladeventil 52 in dem ersten Ventilblock 98.1 der Pneumatikanlage 90 integriert ist.

Zum Betrieb der Druckmittelversorgungsanlage 10.2 der Fig. 2 kann ein normaler Befüll- und Entlüftungsvorgang im offenen Betrieb, wie anhand von Fig. 1 erläutert, bei geöffnetem Trennventil 99 durchgeführt werden. Ein Boost-Befüllen im Rahmen eines Heben-Vorgangs kann bei geöffnetem Speicherventil 94 und geschlossenem Trennventil 99 und geöffnetem zweiten Ladeventil 52 unter Nutzung sowohl des anstehenden geladenen Druckmittels gDM am zweiten Druckmitteladeanschluss 1.2 als auch eines von der ersten Verdichterstufe 31.1 zur Verfügung gestellten weiteren Druckmittels tDM zur weiteren zweiten Verdichterstufe 31.2 erfolgen. Analog gilt dies auch für einen Senken-Vorgang, bei dem ein Balgventil 93 geöffnet ist und das Trennventil 99 geschlossen ist; in dem Fall kann das zum Senken aus den Bälgen entweichende Druckmittel zum Befüllen des Speichers 92 verwendet werden. D. h. es kann auch im Unterschied zu einem offen gestalteten Senken-Vorgang ein geschlossener Senken-Vorgang vorgenommen werden, in dem ein Balgventil 93 als auch das Speicherventil 94 und das zweite Ladeventil 52 geöffnet wird unter Betrieb des Verdichters 31; insofern ein Boost-Betrieb für einen Senken-Betrieb. Im Ergebnis ergibt sich dann eine Umspeicherung von Druckluft vom Balg 91 in den Speicher 92 über den Verdichter 31. Auch dies erfolgt vorteilhaft unter Nutzung des am zweiten Druckmittelladeanschluss 1.2 anstehenden geladenen Druckmittels gDM eines Balgs 91als auch des von der ersten Verdichterstufe 31.1 zur Verfügung gestellten weiteren Druckmittels tDM zur zweiten Verdichterstufe 31.2 indem diese gleichzeitig und frei von Rückhaltedruck geführt werden.

Fig. 3 zeigt eine vereinfachte Ausführungsform im Vergleich zu Fig. 2; nämlich ein vereinfachtes pneumatisches System 100.3 mit einer Druckluftversorgungsanlage 10.3 und einer Pneumatikanlage 90.3. Dabei ist diesmal ein 6-fach-Ventilblock 98 als einziger Ventilblock mit vier Balgventilen 93, einem Speicherventil 94 und einem Trennventil 99 gebildet. Hier ist eine erste Ladezweigleitung 92ZL.1 sowohl an die Galerie 95 angeschlossen als auch an den ersten Druckmittelladeanschluss 1.1. In der Druckluftversorgungsanlage 10 ist eine erste Druckmittelladeleitung 20.1 zwischen dem ersten Druckmittelladeanschluss 1.1 und der Verdichterleitung 21 angeschlossen. In der Ladeanordnung 30.3 ist in der ersten Druckmittelladeleitung 20.1 ein erstes Ladeventil 51 und eine erste nennweitenfeste Drossel 43 mit fester Nennweite angeschlossen; diesmal in umgekehrter Reihenfolge im Vergleich zu Fig. 1. Der Motor M und das erste Ladeventil 51 sind wiederum über elektrische Steuersignale SM, SL1 ansteuerbar. Das Trennventil 99 ist über ein elektrisches Steuersignal ST und das Entlüftungssteuerventil 81 über ein elektrisches Steuersignal SE ansteuerbar. Bei stromlos geschlossenem Trennventil 99 und geöffnetem Speicherventil 94 sowie laufendem Verdichter 31 kann im Rahmen eines Senken-Vorgangs bei geöffneten Balgventil 93 der Speicher 92 weiter aufgefüllt werden.

Fig. 4 zeigt eine besonders gut ausgebaute Ausführungsform einer Ladeanordnung 30.4, die über einen ersten Druckmittelladeanschluss 1.1 und einen zweiten Druckmittelladeanschluss 1.2 an die Pneumatikanlage 90 angeschlossen ist. In diesem Fall ist an den ersten Druckmittelladeanschluss 1.1 eine erste Ladezweigleitung 92ZL.1 zu einer Speicherleitung 92L angeschlossen. Zwischen dem zweiten Druckmittelanschluss 1.2 und der Galerie 95.1 ist eine zweite Ladezweigleitung 92.ZL.2 angeschlossen, nämlich über ein zweites Ladeventil 52, das ähnlich wie bei der Ausführungsform der Fig. 2 in einem 5-fach-Ventilblock 98.1 integriert ist. Auf diese Weise kann über die an dem ersten bzw. zweiten Druckmittelladeanschluss 1.1, 1.2 angeschlossene erste Druckmittelladeleitung 20.1 bzw. zweite Druckmittelladeleitung 20.2 Druckmittel der Verdichterleitung 21 zugeführt werden, nämlich bei geöffnetem ersten Ladeventil 51 und geöffnetem zweiten Ladeventil 52. Eine Ansteuerung des ersten und zweiten Ladeventils 51, 52 erfolgt über elektrische Steuersignale SL1, SL2. Die Ansteuerung des Steuerventils 81 erfolgt über ein elektrisches Signal SE. Die Ansteuerung des Trennventils 99 erfolgt über ein elektrisches Steuersignal ST.

Die Ansteuerung des Motors M des Verdichters 31 erfolgt über ein elektrisches Steuersignal SM.

Sämtliche Steuersignale können von einem Pneumatiksteuermodul S innerhalb eines Fahrzeugsteuergeräts ECU zur Verfügung gestellt werden, das auch Sensorsignale p eines Drucksensors 97 ein Niveausignal N und ein Feuchtesignal h des Trockners 62 empfängt. Die erste und zweite Drossel 43, 44 hat vorliegend eine feste Nennweite; beide Drossel 43, 44 oder auch nur die erste Drossel 43 oder nur die zweite Drossel 44 können in dem ersten Ladeventil 51 bzw. dem zweiten Ladeventil 52 integriert sein auch wenn sie vorliegend separat in der Ladeanordnung 30.4 gezeigt sind.

Die vorliegende Ausführungsform erlaubt einen Boostbetrieb als Heben-Vorgang bei geöffnetem erstem Ladeventil 51 und geöffnetem Trennventil 99 sowie geschlossenem Speicherventil 94 unter Betrieb der ersten und zweiten Verdichterstufe 31.1, 31.2. Die vorliegende Ausführungsform erlaubt auch ein Senken im Boost-Betrieb bei geöffnetem zweitem Ladeventil 52 unter Betrieb des Verdichters 31 und unter Befüllung des Speichers 92 bei geöffnetem Speicherventil 94 und geschlossenem Trennventilen 99.

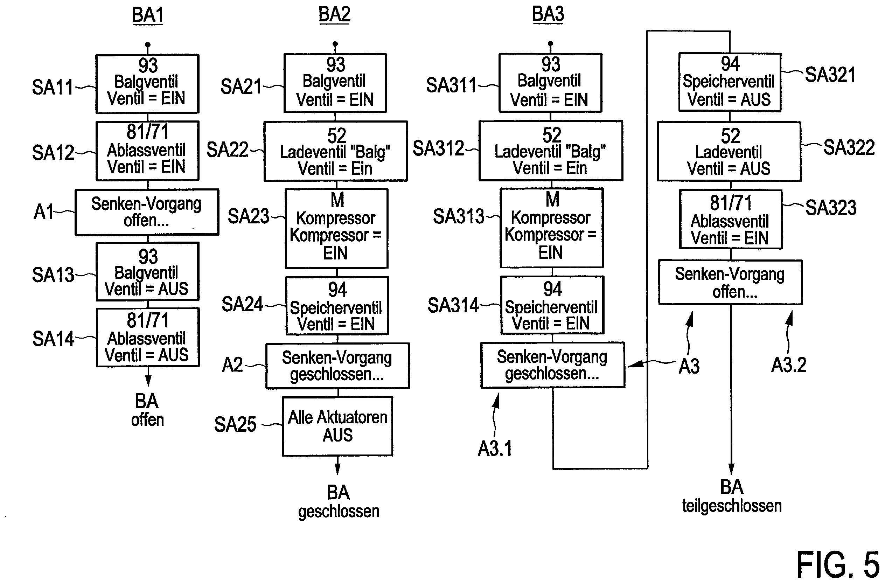

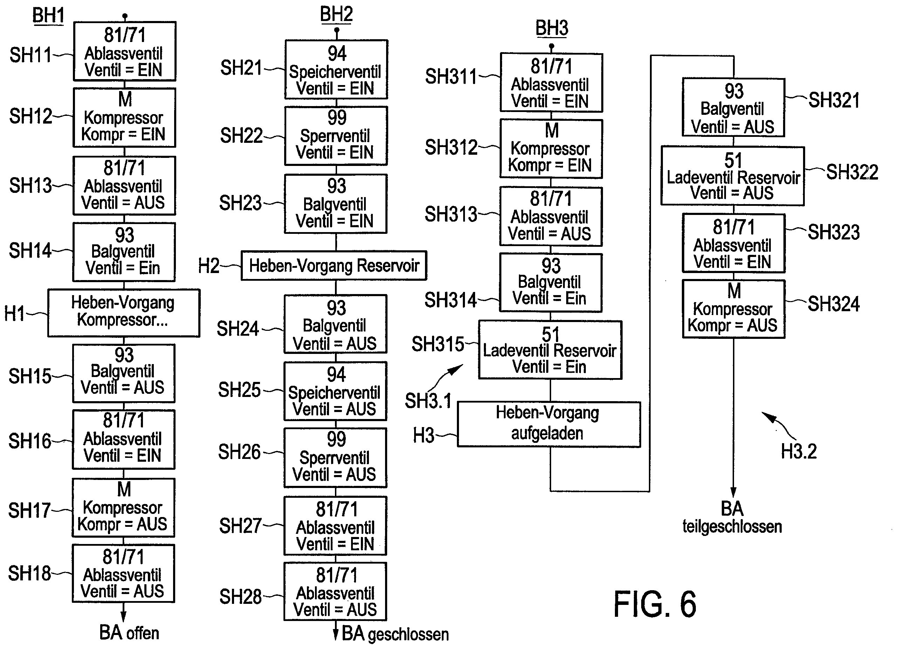

Bevorzugte Betriebsweisen der vorgenannten Druckmittelversorgungsanlagen 10.1, 10.2, 10.3 und 10.4 sind in den folgenden Fig. 5 und Fig. 6 im Einzelnen beispielhaft beschrieben. Verkürzt kann für die im Folgenden beschriebene offene Betriebsart grundsätzlich festgehalten werden, dass eine Druckluft nur aus der Atmosphäre gewonnen wird, bzw. in diese entweicht. Für eine geschlossene Betriebsart kann grundsätzlich festgehalten werden, dass eine Druckluft nur umgefüllt wird ohne Verdichterbetrieb. Für eine teilgeschlossene Betriebsart kann grundsätzlich festgehalten werden, dass eine Ansaugung von Luft aus der Atmosphäre erfolgt unter Erzeugung von Druckluft mit einer ersten Verdichterstufe und eine weitere Verdichtung derselben als auch bereits geladener Druckluft in der zweiten Verdichterstufe erfolgt.

Fig. 5 zeigt ein Ablaufdiagramm für drei unterschiedliche Varianten BA1, BA2 sowie BA3 eines Verfahrens zum Senken eines Fahrzeugaufbaus mittels wahlweise offenem Senken-Vorgang A1 und geschlossenem Senken-Vorgang A2 oder teilgeschlossenem Senken-Vorgang A3 und entsprechendem Betrieb einer Pneumatikanlage 90 in Form einer Luftfederanlage, die entsprechend auch zur Niveauregelung ausgelegt ist. Das Verfahren zum teilgeschlossenen Senken A3 weist eine erste Schrittfolge A3.1 im geschlossenen Betrieb des Pneumatiksystems und eine zweite Schrittfolge A3.2 im offenen Betrieb auf, die sequenziell hintereinander ausgeführt werden und worunter vorliegend der teilgeschlossene Betrieb zu verstehen ist. Die Varianten BA2 und BA3 sind mit jeder der in Fig. 2 bis Fig. 4 beschriebenen pneumatischen Systeme 100.2, 100.3 100.4 ausführbar und die Variante BA1 mit jeder der in Fig. 1 bis Fig. 4 beschriebenen pneumatischen Systeme 100.1, 100.2, 100.3 100.4 ausführbar. Zur Beschreibung wird eine Druckluftversorgungsanlage im Folgenden allgemein für die vorangehenden Fig. mit 10 bezeichnet. Dazu wird eine Pneumatikanlage im Folgenden kumulativ für die vorangehenden Fig. mit 90 bezeichnet. Dazu wird ein pneumatisches System im Folgenden kumulativ für die vorangehenden Fig. mit 100 bezeichnet.

Das Senkverfahren BA1 im offenen Betrieb der Druckluftversorgungsanlage 10 sieht in einem ersten Schritt SA11 die Ansteuerung eines Balgventils 93 vor, das damit in den bestromt-geöffneten Zustand überführt wird. Die Druckmittelkammer einer Luftfeder, d. h. der Balg 91 ist damit pneumatisch geöffnet zu einer Galerie 95 oder ersten Galerie 95.1. Im Falle der Systeme 100.4, 100.2, 100.3 der Fig. 4 und Fig. 2 und der Fig. 3 wird bei geschlossenem zweiten Ladeventil 52 das Trennventil 99 ebenfalls angesteuert und in den bestromt-geöffneten Zustand überführt bzw. das erste Ladeventil 51 bei Fig. 3 geschlossen. Damit kann im Balg 91 enthaltene Druckluft zum Druckmittelanschluss 2 entweichen. In einem zweiten Schritt SA12 wird das Steuerventil 81 mittels dem Steuersignal SE angesteuert und damit in den bestromten zweiten Schaltzustand überführt, der die Steuerleitung 110 zum Steueranschluss 71S des Entlüftungsventils 71 öffnet und dieses somit in den bidirektional geöffneten zweiten Schaltzustand überführt. Die am Druckmittelanschluss 2 aus dem Balg 93 anstehende Druckluft kann so über die erste Regenerations-Drossel 64 das entsperrte Rückschlagventil 61 und unter Regeneration des Lufttrockners 62 in die Entlüftungsleitung 70 entweichen, sowie schließlich in den Entlüftungsanschluss 3 und von dort über den Filter 0.3 in die Umgebung. Es erfolgt dann ein offener Senken-Vorgang A1. Danach geht das Balgventil 93 in dem Schritt SA13 in ein stromlos geschlossenes Balgventil 93 über und im Schritt SA14 geht das Entlüftungsventil 71 in einen nicht angesteuerten Zustand eines geschlossenen Entlüftungsventil 71 über, bei dem das Rückschlagventil 61 also nicht entsperrt ist und die Entlüftungsleitung 70 durch das Entlüftungsventil 71 gesperrt ist; also der Zustand, der sich bei nicht bestromten Steuerventil 81-wie in Fig. 1 bis Fig. 4 dargestellt-- einstellt.

Für das mit den Schritten SA21 bis SA25 vorgesehene geschlossene Senkverfahren BA2 befindet sich die Druckluftversorgungsanlage 10 im geschlossenen Betriebszustand. In diesem Betriebszustand sieht der Schritt SA21 die Ansteuerung eines Balgventils 93 vor, das damit in den bestromt-geöffneten Zustand überführt wird unter Ablassen von Druckluft aus dem Balg 91 in die Galerie 95. Im Schritt SA22 ist die Ansteuerung z. B. in Fig. 2 und Fig. 4 des zweiten Ladeventils 52 vorgesehen, das damit in den bestromt geöffneten Zustand mittels des Steuersignals SL2 überführt wird. Bei der in Fig. 3 dargestellten Ausführungsform einer Druckluftversorgungsanlage 10 wird über das Steuersignal SL1 das erste Ladeventil 51 angesteuert und in dem bestromt geöffneten Zustand überführt. Im Ergebnis kann dann im Schritt SA23 über das Steuersignal SM für den Motor M des Verdichters 31 sowohl die erste als auch die zweite Verdichterstufe 31.1, 31.2 betätigt werden, so dass damit die Ladeanordnung 30 ausgebildet ist, zur gleichzeitigen Führung von dem am wenigstens einen Druckmittelladeanschluss 1.2, 1.1. anstehenden geladenen Druckmittels gDM als auch von der ersten Verdichterstufe 31.1 zur Verfügung gestellten weiteren Druckmittels tDM zur zweiten Verdichterstufe 31.2. Das so einem Balg 91 entnommene geladene Druckmittel gDM kann zusammen mit dem weiteren Druckmittel tDM aus der ersten Verdichterstufe 31.1 in einer durch die zweite Verdichterstufe 31.2 verdichteten Form der Druckmittelzuführung 1 zur Verfügung gestellt werden. Von dort gelangt das wiederum hochverdichtete Druckmittel insgesamt über den Lufttrockner 62 und unter Öffnen des Rückschlagventils 61 in Durchlassrichtung zum Druckmittelanschluss 2. Vom Druckmittelanschluss 2 kann das Druckmittel dann über die weitere Druckmittelleitung 96 und die Galerie 95 bzw. eine erste und/oder zweite Galerie 95.1, 95.2 bei im Schritt SA24 bestromt geöffnetem Speicherventil 94 dem Druckmittelspeicher 92 zur Verfügung gestellt werden und darin vorgehalten werden. In dem dann folgenden geschlossenen Senken-Vorgang A2 entweicht die dem Balg 91 entnommene Druckluft nicht in die Umgebung, sondern in den Speicher 92 und kann dort zur weiteren Verwendung vorgehalten werden. Danach sieht Schritt SA25 einen unbestromten Zustand aller Ventile vor.

Der teilgeschlossene Senken-Vorgang BA3 sieht eine erste Schrittfolge SA311 bis SA314 vor, die zum geschlossenen Senken-Vorgang A3.1 führt. Die Schritte SA311 bis SA314 zur Vorbereitung des geschlossenen Senken-Vorgangs A3.1 der teilgeschlossenen Betriebsart A3 entspricht im Wesentlichen den Schritten SA21 bis SA24 wie zuvor beschrieben. Ein Umschalten auf einen offenen Senken-Vorgang A3.2 kann bei dem teilgeschlossenen Senken-Vorgang A3 jedoch vorgenommen werden unter Ausführung der weiteren Schritte SA321 bis SA323. Dazu wird in Schritt SA321 das Speicherventil 94 in den nicht angesteuerten, d. h. stromlos geschlossenen Zustand überführt und anschließend ein zweites Ladeventil 52 der Fig. 2 und Fig. 4 bzw. ein erstes Ladeventil 51 der Fig. 1 und Fig. 3 in den stromlosgeschlossenen Zustand überführt werden. Anschließend kann im Schritt SA323 das Entlüftungsventil 71 angesteuert werden, d. h. das Steuerventil 81 wird in den bestromten zweiten Schaltzustand überführt. Dies führt dazu, dass --wie im Zusammenhang mit Schritt SA12 erläutert wurde-- Druckluft aus dem Balg 93 nun direkt über den Druckmittelanschluss 2 und die Entlüftungsleitung 70 unter Regeneration des Lufttrockners 62 in den Entlüftungsanschluss 3 entweichen kann.

Der teilgeschlossene Senken-Vorgang A3 setzt sich sozusagen aus einer unmittelbar aneinander anschließenden Sequenz eines geschlossenen Senken-Vorgangs A3.1 mit Schritten SA311 bis SA314 und einem direkt darauf folgenden offenen Senken-Vorgang A3.2 mit Schritten SA321 bis SA323 zusammen; im Ergebnis wird bei dem teilgeschlossenen Senken-Vorgang A3 erreicht, dass der Senken-Vorgang mit zwei unterschiedlichen Senkgeschwindigkeiten durchführbar ist, nämlich mit einer eher langsameren Senkgeschwindigkeit im geschlossenen Senken-Vorgang A3.1 und mit einer eher schnelleren Senkgeschwindigkeit im offenen Senken-Vorgang A3.2. Wie noch anhand der folgenden Fig. deutlich wird, kann so die tatsächliche Zeit für ein Senken-Vorgang A3 durch geschickte Wahl des Umschaltzeitpunkts zwischen dem geschlossenen Senken-Vorgang A3.1 und dem offenen Senken-Vorgang A3.2 variabel gewählt werden. Auch kann durch eine variable Wahl des Umschaltzeitpunkts zwischen geschlossenem Senken-Vorgang A3.1 und offenem Senken-Vorgang A3.2 im teilgeschlossenen Senken-Vorgang A3 die Zuspeicherung von Druckmittel im Druckspeicher 92 variabel eingestellt werden. Diese kann zur Regeneration des Lufttrockners 62 in einem Entlüftungsvorgang in den Entlüftungsanschluss 3, d. h. zur Atmosphäre genutzt werden.

Fig. 6 zeigt ein Ablaufdiagramm für drei unterschiedliche Varianten BH1, BH2 sowie BH3 eines Verfahrens zum Heben eines Fahrzeugaufbaus mittels wahlweise offenem und geschlossenem oder teilgeschlossenem Betrieb einer Pneumatikanlage 90 in Form einer Luftfederanlage, die entsprechend auch zur Niveauregelung ausgelegt ist. Fig. 6 zeigt für wählbare Betriebsarten eines Heben-Vorgangs einen Verdichter-Heben-Vorgang H1, einen Speicher-Heben-Vorgang H2 sowie einen aufgeladenen Laden-Heben-Vorgang H3, wobei dieser letzte im Boost-Betrieb erfolgt. Der Verdichter-Heben-Vorgang H1 sieht im Schritt SH11 die Ansteuerung des Entlüftungsventils 71 über das Steuerventil 81 vor, in dem das Steuerventil 81 über das Steuersignal SE in den bestromten zweiten Zustand überführt wird, so dass der Steuerkolben 71S des Entlüftungsventils 71 betätigt wird; nämlich unter Entsperrung des Rückschlagventils 61, so dass gleichzeitig die pneumatische Hauptleitung 60 und die Entlüftungsleitung 70 geöffnet sind. Anschließend wird im Schritt SH12 über das Steuersignal SM der Motor M des Verdichters 31 angesteuert, d. h. betätigt unter Luftverdichtung von über die Ansaugleitung 20 angesaugter Luft mit beiden Verdichterstufen 31.1 und 31.2. Der Verdichter 31 läuft somit ohne Gegendruck und damit mit geringem Anlaufwiderstand an; im Schritt SH13 wird anschließend das Entlüftungsventil 71 wieder in den unangesteuerten in Fig. 1 bis Fig. 4 gezeigten Schaltzustand überführt indem die Bestromung des Steuerventils 81 aufgehoben wird; in dem Fall wird die Entlüftungsleitung 70 also geschlossen und der Verdichter 31 baut Druck in der pneumatischen Hauptleitung 60 unter Öffnen des Rückschlagventils 61 in Durchlassrichtung auf. Am Druckmittelanschluss 2 anstehendes Druckmittel kann so bei im Schritt SH14 angesteuerten und damit bestromt geöffneten Balgventil 93 einem Balg 91 einer Luftfeder zugeführt werden. Dieser normale Verdichter-Heben-Vorgang H1 ist üblicherweise zu bevorzugen, für den Fall, dass ein Drucksensor 97 anzeigt, dass ein Speicher-Heben-Vorgang H2 wegen mangelndem Druck im Speicher 92 nicht möglich ist. und/oder dass ein Boost-Betrieb gemäß Variante BH3 wegen mangelndem Speicherdruck nicht möglich ist. Im Schritt SH15 wird ein stromlos geschlossenes Balgventil 93 und im Schritt SH16 ein über das Steuerventil 81 angesteuertes Entlüftungsventil 71 dargestellt. Das in dieser Kombination als eingeschaltetes Ablassventil bezeichnete Ventil öffnet die pneumatische Hauptleitung 60 und die Entlüftungsleitung 70 beidseitig des Lufttrockners 62 in der anhand von Schritt SH11 erläuterten Weise beidseitig. Anschließend wird im Schritt SH17 der Motor M mittels Steuersignal SM ausgeschaltet und anschließend im Schritt SH18 das Entlüftungsventil unter Aufheben der Bestromung des Steuerventils 81 zum Schließen der Entlüftungsleitung 70 und des Rückschlagventils 61 veranlasst. Die Entlüftungsleitung 70 als auch die pneumatische Hauptleitung 60 ist damit drucklos geschaltet.

Für den Speicher-Heben-Vorgang H2 gemäß der geschlossenen Betriebsvariante BH2 werden im Folgenden die Schritte SH21 bis SH28 erläutert.

Für den eigentlichen Heben-Vorgang aus Speicher 92 sieht der Schritt SH21 zunächst das Ansteuern eines Speicherventils 94 vor, das damit in dem bestromt geöffneten Zustand überführt wird. Anschließend wird in Schritt SH22 das Sperrventil 99 und im Schritt SH23 das gewünschte Balgventil 93 angesteuert und damit in den bestromt geöffneten Zustand überführt. Aus dem Speicher 92 bei hohem Druckniveau entweichende Druckluft kann somit über die zweite Galerie 95.2 in die erste Galerie 95.1 und in eine Balgleitung 91L und dann in den Balg 91 unter Heben des Fahrzeugaufbaus im Schritt H2 entweichen. Bei der in Fig. 2 , Fig. 3 und Fig. 4 gezeigten Ausführungsform entweicht Druckluft aus dem Speicher 92 über das geöffnete Speicherventil 94 und das geöffnete Trennventil 99 direkt in die Galerie 95. Bei der in Fig. 1 gezeigten Ausführungsform entweicht aus dem Speicher Druckluft bereits über die Speicherleitung 92L und das geöffnete Speicherventil 94 in die Galerie 95. Die Ladeventile 51, 52 sind sowohl beim Verdichter-Heben-Vorgang H1 als auch beim Speicher-Heben-Vorgang H2 zu jedem Zeitpunkt unbestromt, d. h. halten eine Ladezweigleitung 92ZL.1 bzw. 92ZL.2 geschlossen. Ebenso ist die pneumatische Hauptleitung 60 in Folge des nicht angesteuerten Zustands des Entlüftungsventils 71 in Sperrrichtung des Rückschlagventils 61 geschlossen.

In den Schritten H24 bis SH26 geht der aufgeladene Laden-Heben-Vorgang von unbestromt geschlossenen Zuständen des Balgventils 93 des Speicherventils 94 und des Sperrventils 99 aus. Im Schritt SH27 wird das Entlüftungsventil 71 unter Ansteuern, d. h. Bestromen des Steuerventils 81 mittels des Steuersignals SE in den zweiten Schaltzustand überführt, so dass die pneumatische Hauptleitung 60 und die Entlüftungsleitung 70 in der beispielsweise anhand von Schritten SH11 und SH16 beidseitig geöffneten Zustand für den Lufttrockner 62 überführt sind. Dies führt zur Entlüftung der pneumatischen Hauptleitung 60 und der Entlüftungsleitung 70 wonach in Schritt SH28 das Entlüftungsventil 71 bei unbestromtem Zustand des Steuerventils 81 wieder in den in Fig. 1 bis Fig. 4 gezeigten ersten Schaltzustand zurückfällt.

Der aufgeladene Heben-Vorgang H3 gemäß Variante BH3 sieht den eigentlichen Laden-Heben-Vorgang H3.1 und in Abschluss desselben eine Entlüftung gemäß H3.2 vor, nämlich mit Schritten SH311 bis SH315 bzw. Schritten SH321 bis SH324. Für den eigentlichen aufgeladenen Laden-Heben-Vorgang H3.1 sieht Schritt SH311 das Ansteuern des Entlüftungsventils 71 über das Steuerventil 81 vor, so dass in Schritt SH312 der Motor des Verdichters 31 ohne Widerstand anlaufen kann. Anschließend wird die Ansteuerung des Steuerventils im Schritt SH313 aufgehoben, so dass das Entlüftungsventil 71 die Entlüftungsleitung 70 sperrt und die Hauptleitung 60 bei laufendem Verdichter 31 durch Öffnen des Rückschlagventils 61 in Durchlassrichtung geöffnet wird sobald der Verdichter 31 einen entsprechenden Druck aufgebaut hat. Anschließend wird im Schritt SH314 das gewünschte Balgventil 93 geöffnet durch Ansteuern des Bestromen desselben. Im Schritt H315 wird zusätzlich parallel das erste Ladeventil 51 geöffnet. Bei dem geschlossenen Speicherventil 94 wird sodann in den in Fig. 1 und Fig. 4 gezeigten Ausführungsformen auch Druckmittel aus dem Speicher 92 der zweiten Verdichterstufe zugeführt, womit der Hebevorgang H3 der Pneumatikanlage 90 beginnt. Ist dieser abgeschlossen folgt im Schritt H321 das Schließen des Balgventils 93 unter Aufheben der Bestromung und das Schließen des ersten Ladeventils 51 im Schritt SH322, ebenfalls unter Aufheben der Bestromung.

Anschließend wird die Druckluftversorgungsanlage in den Schritten H323 und H324 entlüftet, indem das Entlüftungsventil 71 über das Steuerventil 81 in den zweiten die Entlüftungsleitung 70 öffnenden Zustand überführt wird und der Motor im Schritt H324 ausgeschaltet wird über das Steuersignal SM.

Wie anhand von Fig. 6 erläutert, ermöglicht die wahlweise offene, geschlossene oder teilgeschlossene Betriebsart der Druckluftversorgungsanlage 10 unter regelmäßig zweistufigen Betrieb des Verdichters 31 somit beim aufgeladenen Laden-Heben-Vorgang H3, wie anhand von Fig. 6 erläutert, nicht nur einen durchgehend zweistufigen Aufladevorgang des Speichers 92 in Kombination mit einem Heben-Vorgang des Balgs 91. Vielmehr ergibt sich der Vorteil des wahlweise offenen, geschlossenen oder teilgeschlossenen Betriebs der vorliegend beispielhaft beschriebenen Druckluftversorgungsanlage 10 der Fig. 1 bis Fig. 4, wie anhand von Fig. 5 erläutert, vor allem beim teilgeschlossenen Senken-Vorgang A3, in dem nämlich die geschlossenen und offenen Senken-Vorgänge A3.1 bzw. A3.2 variabel umgeschaltet werden können. Es ist zu verstehen, dass die beispielhaft beschriebenen geschlossenen bzw. offenen Senken-Vorgänge A 3.1 und A 3.2 für einen teilgeschlossenen Senken-Vorgang A3 beliebig oft miteinander kombiniert und wiederholt werden können. Der teilgeschlossene Senken-Vorgang A3 ist somit ausdrücklich nicht beschränkt auf eine bloß einmalige und erste Ausführung des geschlossenen Senken-Vorgangs A3.1 und eine bloß einmalige und zweite Ausführung des offenen Senken-Vorgangs A3.2. Vielmehr kann die Reihenfolge auch so erfolgen, dass zuerst der offene Senken-Vorgang A3.2 und anschließend der geschlossene Senken-Vorgang A3.1 ausgeführt wird. Es kann auch zunächst ein geschlossener Senken-Vorgang A3.1, danach ein offener Senken-Vorgang A3.2 und schließlich wieder ein geschlossener Senken-Vorgang A3.1 ausgeführt werden, d. h. ein zweimalig geschlossener Senken-Vorgang A3.1 mit einem dazwischen liegenden offenen Senken-Vorgang A3.2. Genauso kann umgekehrt zunächst ein offener Senken-Vorgang A3.2 und abschließend ein offener Senken-Vorgang A3.2 mit einem dazwischen liegenden geschlossenen Senken-Vorgang A3.1 vorgenommen werden. Auch kann in der Abfolge eines teilgeschlossenen Senken-Vorgangs A3 auch eine Folge von vier abwechselnd unterschiedlichen Senken-Vorgängen oder mehr abwechselnd unterschiedlichen Senken-Vorgängen vorgenommen werden. Dieser Umschaltzeitpunkt zwischen einem geschlossenem Senken-Vorgang A3.1 und einem offenen Senken-Vorgang A3.2 kann abhängig von einem Systemzustand des pneumatischen Systems, insbesondere der Pneumatikanlage und/oder Druckluftversorgungsanlage 10 erfolgen. Beispielsweise kann ein Speicherdruck des Speichers 92 als maßgebliche Größe genommen werden, um von einem geschlossenen Senken-Vorgang auf einen offenen Senken-Vorgang umzuschalten, nämlich beispielsweise wenn ein oberer Grenzspeicherdruck erreicht ist. Auch kann von einem offenen Senken-Vorgang auf einen geschlossenen Senken-Vorgang umgeschaltet werden, wenn ein unterer Grenzspeicherdruck erreicht ist. Auch kann ein Niveau N, insbesondere ein Niveau N aus dem abgesenkt werden soll, genutzt werden, um alleine oder in Kombination mit einem Speicherdruck, um einen Zeitpunkt zum Umschalten zwischen einem geschlossenen Senken-Vorgang A3.1 und einem offenen Senken-Vorgang A3.2 festzulegen, d. h. letztlich den Zeitpunkt des Übergangs von Schritt SA314 auf Schritt SA321 oder umgekehrt von einem Schritt SA323 auf einen Schritt SA312 der Fig. 5.

Für einen Umschaltvorgang beim Senkvorgang vom offenen Betrieb in den geschlossenen Betrieb oder umgekehrt gemäß Vorgaben der Variante BA3 können unterschiedliche und je nach Bedarf verschiedene Bedingungen vorgegeben werden. So kann beispielsweise eine Bordnetzspannung derart gering sein, dass ein Kompressor bzw. ein Motor M des Verdichters 31 nicht freizugeben ist. Trotzdem ist bei dem vorliegenden Konzept ein - insbesondere offener - SenkVorgang möglich. Auch kann in einem anderen Beispiel ein Fahrzeugbefehl vorliegen, der vorgibt, dass ein Kompressorbetrieb nicht freizugeben ist. Dies kann z. B. im Fall eines höherwertigen Betriebs eines anderen Verbrauchers eintreten, wenn die Bordnetzspannung einzuhalten ist. Auch hier wäre trotzdem ein - insbesondere offener - Senkenvorgang möglich.

Auch kann ein Beladungszustand allein oder in Kombination mit einem Reservoirdruck RD --d. h. Druck im Speicher 92-- zur Bestimmung eines solchen Zeitpunkts herangezogen werden. Auch kann eine Kombination des Reservoirdrucks zusammen mit der Beladung und einer aktuellen Niveaulage aus der abgesenkt werden soll, genutzt werden, um einen Umschaltzeitpunkt zu bestimmen. Zusätzlich kann allein oder in Kombination mit einem vorgenannten Parameter Speicherdruck, aktuelle Niveaulage aus der abgesenkt wird und Beladung die Feuchtigkeitsbeladung eines Trockners genutzt werden, um einen Umschaltzeitpunkt zu bestimmen. Es hat sich nämlich beispielsweise gezeigt, dass ein Speicher 92 auf einen höheren Speicherdruck aufgeladen werden kann, um diesen sozusagen zusätzlichen Drucküberschuss, beispielsweise für eine Regeneration des Lufttrockners 62 zu nutzen, für den Fall, dass dies erforderlich sein sollte in Anbetracht einer angemessenen oder prognostizierten Feuchtigkeitsbeladung des Lufttrockners 62. Der Beladungszustand kann beispielsweise über einen Balgdruck oder anderweitig prognostiziert werden.

Insgesamt kann mit einem, gemäß dem Konzept der Erfindung und beispielhaft anhand der Ausführungsform der Fig. 1 bis Fig. 4 erläuterten pneumatischen System eine vereinfachte Entlüftungsanordnung wie die Ventilanordnung 80 vorgesehen sein als auch eine vereinfachte Messung des Speicherdrucks, beispielsweise durch Anschließen eines Drucksensors 97 an die Galerie 95, wobei gleichzeitig über den Drucksensor 97 auch ein Balgdruck allein oder kumulativ mit anderen Bälgen gemessen werden kann. Es zeigt sich, dass aufgrund der nachhaltigeren Bevorratung und Erzeugung von zusätzlichen Druckmitteln für den Speicher 92 ein maximaler Speicherdruck grundsätzlich reduzierbar ist, da Druckmittel grundsätzlich in kürzeren Taktraten und flexibler sowie ggf. zusätzlich erzeugbar zur Verfügung steht. Auch zeigt sich, dass das zur Verfügung stehende Druckmittel im Speicher 92 nicht mehr für beliebig hohe oder eine bestimmte Mehrzahl von Hebevorgängen zur Verfügung stehen muss; vielmehr hat sich eine Druckmittelbevorratung als ausreichend erwiesen, die für einen einmaligen Heben-Vorgang ausreicht.

Es zeigt sich, dass das erste und/oder zweite Ladeventil 51, 52 mit vergleichsweise geringen Nennweiten im Bereich zwischen max. 0,5 mm bis 1,5 mm, vorzugsweise zwischen max. 0,6 mm bis 1,2 mm, vorzugsweise zwischen 0,6 mm bis 0,8 mm auslegbar sind. Es zeigt sich auch, dass die erste und/oder zweite Drossel mit vergleichsweise großzügigen Nennweiten unterhalb von 1,8 mm, insbesondere unterhalb von 1,7 mm auslegbar sind; dies trifft insbesondere für die erste Drossel, nämlich hier die Regenerations-Drossel 64 zu, ohne dass einerseits die Regenerationsfähigkeit des Lufttrockners leidet und andererseits Kompromisse bei der Lüftungszeit unvorteilhaft notwendig wären. Insbesondere zeigt sich, dass die Ausführung der zweiten Drossel, nämlich hier der Entlüftungs-Drossel 74, unterhalb von 1,0 mm, insbesondere unterhalb von 0,8 mm liegen kann, was eine vergleichsweise großzügige Auslegung des Entlüftungsventils 71 mit Nennweiten im Bereich zwischen 1,5 mm bis 2,5 mm, insbesondere 1,6 mm bis 2,2 mm, insbesondere um 1,7 mm bis 2,0 mm erlaubt.

Das Konzept der Erfindung führt bei dieser Auslegung dazu, dass wie anhand von Fig. 6 erläutert, grundsätzlich ein Speicher-Heben-Vorgang H2 möglich wird und vermehrt nutzbar ist. Dies führt zu einem zu bevorzugenden eingeschränkten Verdichterbetrieb. Stattdessen kann bei Bedarf ein aufgeladener Laden-Heben-Vorgang H3 durchgeführt werden. Grundsätzlich ist jedoch auch ein Verdichter-Heben-Vorgang H1 möglich. Andererseits ermöglicht es das Konzept der Erfindung, wie anhand von Fig. 5 erläutert wurde, dass grundsätzlich ein geschlossener Senken-Vorgang A2 genutzt werden kann während gleichwohl für schnelle Vorgänge auch ein vollständig offener Senken-Vorgang A1 nutzbar ist. Bevorzugt ist aber ein teilgeschlossener Senken-Vorgang A3, der synergetisch genutzt werden kann, um ein Druckniveau im Speicher 92 auf vergleichsweise hohem Niveau zu halten.

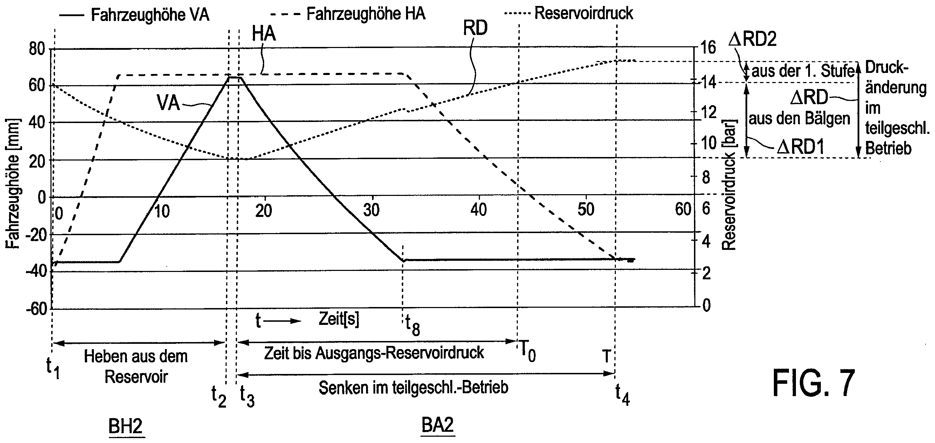

Es zeigt sich das unter Nutzung des Konzepts der Erfindung zwar grundsätzlich ein langsameres Senken im geschlossenen Senken-Vorgang A2 oder im teilgeschlossenen Senken-Vorgang A3 angestrebt ist, jedoch im geschlossenen Senken-Vorgang A2 bei zweistufigen Betrieb des Verdichters 31 der Speicherdruck im Speicher 92 erhöht werden, da die erste Verdichterstufe Druckmittel zur Verfügung stellt, das zur Erhöhung des Speicherdrucks zuträglich ist. Andererseits kann im Speicher zusätzlich und damit variabel zur Verfügung stehendes Druckmittel genutzt werden, um beispielsweise eine Konstante Hebegeschwindigkeit zu erreichen oder bei Bedarf eine verbesserte und häufigere Regeneration des Lufttrockners 62 vorzunehmen. Insgesamt führt das Konzept der Erfindung zu einer bevorzugten reduzierten Verdichterlaufzeit, da der Betrieb des Verdichters 31 im Falle einer Nutzung besonders effektiv und mit gleichmäßig hoher Auslastung erfolgt und zusätzlich die Möglichkeit gegeben ist, überschüssiges Druckmittel im Speicher 92 vorzuhalten. Solche und andere Vorteile werden insbesondere ersichtlich anhand der in Fig. 7 bis Fig. 9b beispielhaft erläuterte Druckverläufe für bestimmte Heben-Senken-Sequenzen des pneumatischen Systems der Fig. 1 bis Fig. 4 unabhängig von der Ausführungsform.

So zeigt sich beispielsweise das bei einem ersten Beispiel das bei einem dreimaligen Heben-Senken-Vorgang zwischen Niveauhöhen von -35 mm bis 63 mm und einem anschließendem Speicherfüllvorgang bis 18 bar für ein Speichervolumen von 10 l, ausgehend von einem Startdruck im Speicher von 18 bar bei einem Speichermaximaldruck von 18bar Folgendes:

Die Laufzeit des Verdichters ist von 194 Sek. im Falle eines Betriebs ohne teilgeschlossenem Betrieb auf 96 Sek. mit teilgeschlossenem Betrieb reduziert. Der Senken-Vorgang vollzieht sich mit einer in etwa verdoppelten Senkzeit; dafür halbiert sich jedoch die wichtigere absolute Heben-Zeit. Die Geschwindigkeit beim Anheben ist bei reduzierter Heben-Zeit jedoch immer konstant gehalten.

In einem von den gleichen Parameter ausgehenden zweiten Beispiel, d. h. einem dreifachen Heben-Senken-Sequenz zwischen -35 mm und 63 mm bei anschließendem Füllen des Speichers auf 18 bar bei 10 l Speichervolumen ausgehend von einem Startdruck im Speicher von 12 bar bei einem maximalen Speicherdruck von 18 bar ergeben sich folgende Verbesserungen: Die Laufzeit des Verdichters ist von 330 Sek. (ohne teilgeschlossenen Betrieb) auf 214 Sek. (mit teilgeschlossenem Betrieb) reduziert. Das Senken vollzieht sich mit etwa doppeltem Zeitaufwand. Der Zeitaufwand für einen Heben-Vorgang ist jedoch halbiert und die Hebegeschwindigkeit ist beim Heben konstant.

In einem dritten Beispiel ergibt sich bei einer dreifachen Heben-Senken-Sequenz zwischen -35 mm und 63 mm sowie anschließendem Speicherauffüllen bis 18 bar bei einem Speichervolumen von 5 l sowie einem Startdruck im Speicher von 18 bar bei einem maximalen Speicherdruck von 18 bar folgendes Ergebnis:
Die Laufzeit des Verdichters 31 ist von 181 Sek. ohne teilgeschlossenen Betrieb auf 95 Sek. reduziert. Senken-Vorgänge benötigen etwa den doppelten Zeitaufwand während jedoch der Zeitaufwand für einen Hebevorgang auf die Hälfte reduziert ist und der Hebevorgang mit in etwa immer konstanter Geschwindigkeit erfolgt.

In allen Bespielen zeigt sich, dass die Heben-Senken-Sequenz beliebig oft wiederholbar ist, da in jedem Systemzustand ausreichend Druckmittel im Speicher zur Verfügung steht. Letztendlich führt diese Erkenntnis dazu, dass das Konzept der Erfindung maßgeblich genutzt werden kann, um einen Speicherbauraumvolumen zu reduzieren auf beispielsweise 5 l; dies stellt einen erheblichen Vorteil bei gegrenzten Bauraumvolumen im Motor- oder Fahrzeugraum eines Fahrzeuges dar. Insbesondere zeigt sich, dass das Konzept der Erfindung auch genutzt werden kann, um bei verringertem Speicherbauraumvolumen dennoch den Speicherkörper für einen höheren Maximaldruck auslegen zu können von beispielsweise 8 l Speichervolumen.

Einzelne beispielhafte Druckverläufe zur Sache sind in Fig. 7 bis Fig. 9b dargestellt.

Fig. 7 zeigt für den Verlauf des Niveaus N der Vorderachse VA und der Hinterachse HA --angegeben als Fahrzeughöhe über die Zeit t in [s]-- den Verlauf eines Speicherdrucks RD (Reservoirdruck) in [bar]. Der zwischen t1 und t2 stattfindende Heben-Vorgang der Heben-Senken-Sequenz ist ein Speicher-Heben-Vorgang H2 wie er anhand von Fig. 6 erläutert wurde unter Durchführung der Schritte SH21 bis SH28. Der zwischen dem Zeitpunkt t3 bis t4 stattfindende Senken-Vorgang ist ein geschlossener Senken-Vorgang A2 unter Durchführung der Schritte SA21 bis SA25, d. h. mit im Wesentlichen Führung von am wenigstens einen Druckmittelladeanschluss 1.1, 1.2 anstehenden geladenen Druckmittels gDM als auch von der ersten Verdichterstufe 31.1 zur Verfügung gestellten weiteren Druckmittels tDM zur zweiten Verdichterstufe 31.2.

Der als RD bezeichnete Reservoirdruck des Speichers 92 sinkt während des Speicher-Heben-Vorgangs H2, bleibt während des Umschaltvorgangs zwischen t2 und t3 konstant und steigt dann zwischen t3 und t4 während des geschlossenen Senken-Vorgangs A2. Der geringfügig veränderte Verlauf um den Zeitpunkt t8 markiert das Ende des Senken-Vorgangs für die Vorderachse und den Beginn des Senken-Vorgangs für die Hinterachse HA. Der Zeitpunkt T₀ markiert denjenigen Zeitpunkt, an dem der Reservoirdruck RD den Ausgangsdruck zum Zeitpunkt t1 bzw. vor dem Heben-Vorgang des Speichers 92 erreicht; in diesem Fall liegt er knapp unter 14 bar. Aufgrund des durchgehenden druckmittelverdichtenden Betriebs der ersten Verdichterstufe 31.1 während des gesamten Senken-Vorgangs im Rahmen der Schritte SA24, SA25 und SA26 des geschlossenen Senken-Vorgangs A2 ist jedoch der Druckgewinn im Speicher 92 nach dem Zeitpunkt t3 nicht nur einem Druck ΔRD1 aus den Bälgen 91 zuzuordnen, sondern auch einem Druck ΔRD2 aus der ersten Verdichterstufe 31.1. Die gesamte Druckänderung ΔRD ergibt sich somit als ΔRD1+ΔRD2, was der Ausbildung der Ladeanordnung 30 zur gleichzeitigen Führung von am wenigstens einen Druckmittelladeanschluss 1.1, 1.2 anstehenden geladenen Druckmittels gDM als auch von von der ersten Verdichterstufe 31.1 zur Verfügung gestelltem weiteren Druckmittel tDM zur zweiten Verdichterstufe 31.2 zu verdanken ist. Der insofern zusätzlich gewonnene Speicherdruck ΔRD2 kann beispielsweise genutzt werden, um bei einer Trocknerregeneration für eine möglichst effektive Regeneration des Trockners 62 zu sorgen durch Entlüften des Speichers und Absenken des Speicherdrucks auf den Ausgangsdruck zum Zeitpunkt t1 in Höhe von beispielsweise 14 bar. Die zusätzliche Druckamplitude ΔRD2 kann für den Fall etwaiger Leckagen genutzt werden, um diese auszugleichen. Außerdem können energetische Vorteile des geschlossenen Systems bei einem geschlossenen Senken-Vorgang A2 genutzt werden, nämlich insbesondere die kürzere Laufzeit des Verdichters 31 bzw. des Motors M. Außerdem erweist sich der Verdichtungsprozess als thermodynamisch besser. Kalte Luft aus den Bälgen 91 wird verdichtet und nicht nur heiße Luft aus der ersten Stufe des Verdichters 31.1. Es ergibt sich praktisch eine Zwischenkühlung, die thermodynamisch effektiver im Verdichtungsprozess ist.

Fig. 8 zeigt im Wesentlichen den Vorteil des Konzepts der Erfindung, wenn eine Abfolge einer Vielzahl von Heben-Senken-Sequenzen --wie anhand von Fig. 7 grundsätzlich erläutert-- durchgeführt wird. Wieder sind die Fahrzeughöhe der Vorderachse VA und die Fahrzeughöhe der Hinterachse HA als Fahrzeughöhe über die Zeit aufgetragen sowie dazu der als Reservoirdruck RD bezeichnete Druck des Speichers 92. Die dargestellten jeweils über konstante Periodenzeiten T durchgeführten Heben-Senken-Sequenzen wird ein teilgeschlossener Senken-Vorgang A3, wie er anhand von Fig. 5 erläutert wurde, verwendet. Die erste Verwendung des teilgeschlossenen Senken-Vorgangs A3 erfolgt mit einem Umschaltvorgang zwischen den Schritten SA315 und SA321 derart, dass ein Maximaldruck RDₘₐₓ des Speichers 92 beim Senken-Vorgang in Höhe von 18 bar nicht überschritten wird. Ein geeignet gewählter Übergang zwischen einem geschlossenen Senken-Vorgang A3.1 und einem offenen Senken-Vorgang A3.2 macht sich jeweils zu einem Zeitpunkt t7 bemerkbar, bei dem die flache Flanke F1-HA der Hinterachse in eine steile Flanke F2-HA der Hinterachse HA übergeht und der Reservoirdruck RD auf ein Plateau P-RD übergeht. Zum Umschaltzeitpunkt t7 erhöht sich also die Senk-Geschwindigkeit der Hinterachse HA von einer langsamen Senk-Geschwindigkeit im geschlossenen Senken-Vorgang A3.1 auf eine schnelle Senk-Geschwindigkeit im offenen Senken-Vorgang A3.2. Der Speicherdruck RD geht im offenen Senken-Vorgang A3.2 nach dem Zeitpunkt t7 von einer steigenden Flanke vor dem Zeitpunkt t7 auf ein Plateau P-RD von weitgehend konstantem Speicherdruck RD über. Im Ergebnis hat aber die Wahl des teilgeschlossenen Senken-Vorgangs A3 den Vorteil, dass in der Tat eine Periodendauer T einer Senk-Hebe-Sequenz immer konstant gewählt werden kann unabhängig von den Systembedingungen, wenn der Umschaltzeitpunkt zwischen einem geschlossenen Senken-Vorgang A3.1 und einem geöffneten Senken-Vorgang A3.2 geschickt gewählt bzw. abhängig von den Systemvoraussetzungen gewählt wird. Vor allem aber zeigt sich, dass der Speicherdruck des Speichers 92 ausreichend ist, um selbst bei noch vorhandenem offenen Senken-Vorgang A3.2 ausreichend für eine unendliche Wiederholbarkeit der Heben-Senken-Sequenz zu sein.

Fig. 9A zeigt wieder die Fahrzeughöhen der Vorderachse VA und der Hinterachse HA über die Zeitachse im Rahmen des vorliegenden Konzepts einer wahlweise offenen, geschlossenen oder teilgeschlossenen Senk-Betriebs für eine Heben-Senken-Heben-Sequenz. Vorliegend ist dazu in einem ersten Zeitraum zwischen Zeiten t1 bis t2 ein Speicher-Heben-Vorgang H2 vorgesehen, zwischen Zeitpunkt t3 und t7 ein geschlossener Senken-Vorgang A3.1, und zwischen t7 und t4 ein offener Senken-Vorgang A3.2, d. h. insgesamt ein teilgeschlossener Senken-Vorgang A3; anschließend folgt zwischen Zeitpunkten t6 und t9 wiederum ein Speicher-Heben H2. Insofern zeigt Fig. 9A einen vergrößerten Ausschnitt einer Periode T, wie sie anhand von Fig. 8 gezeigt wurde. Die Bezeichnungen sind wie in Fig. 8 gewählt, so dass im Folgenden auf die Beschreibung der Fig. 8 im Einzelnen Bezug genommen ist. In Fig. 9A ist --ähnlich wie in Fig. 7-- zusätzlich der Zeitpunkt t8 bezeichnet, der praktisch dem Zeitpunkt t8 eines abgeschlossenen Senken-Vorgangs für die Vorderachse VA und eines beginnenden Senken-Vorgangs für die Hinterachse HA darstellt. Der Zeitpunkt t7 entspricht dem in Fig. 8 und Fig. 7 bezeichneten Zeitpunkt t7 für die Umschaltung von einem geschlossenen Senken-Vorgang auf einen offenen Senken-Vorgang. Nach Ablauf der Periode T, d. h. beginnend mit Zeitpunkt t6 wiederholt sich die Abfolge der Zeitpunkte t1 bis t4 und t7, wobei der Zeitpunkt t6 dem Zeitpunkt t1 entspricht und der Zeitpunkt t9 der dem Zeitpunkt t2 entspricht.

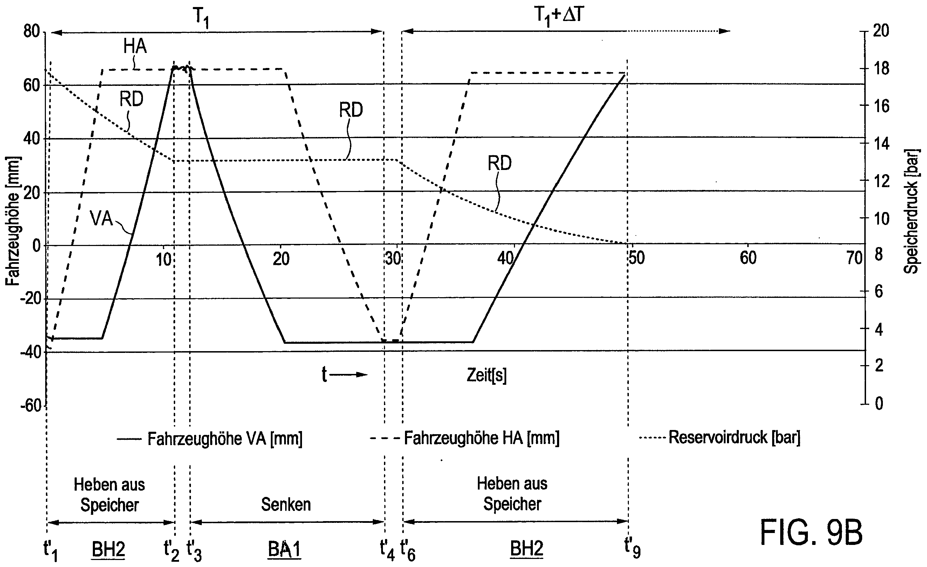

Zum Vergleich ist in Fig. 9B für gleiche Parameter eine Heben-Senken-Sequenz gezeigt mit Zeitpunkten t1', t2', t3', t4', die im Wesentlichen zu den Zeitpunkten t1 bis t4 der Fig. 9A korrespondieren - in diesem Fall ist die Heben-Senken-Sequenz jedoch ohne teilgeschlossenen Betrieb A3 ausgeführt. Dies hat zur Folge, dass das Heben zwar als Speicher-Heben H2-Vorgang durchgeführt werden kann, jedoch das Senken in einem anhand von Fig. 6 erläuterten offenen Senken-Vorgang A1. Der Reservoirdruck RD des Speichers 92 sinkt während des Speicher-Heben H2-Vorgangs und bleibt während des offenen Senken-Vorgangs A1 auf einem konstanten Niveau deutlich unterhalb des Maximal-Speicherdrucks RDₘₐₓ. Bei einer sich wiederholenden Sequenz beginnend mit einem neuerlichen Heben aus Speicher zum Zeitpunkt t6' sinkt deshalb der Reservoirdruck RD weiter und dauert außerdem bis zum Zeitpunkt t9' an, wobei jedoch der Abstand zwischen t9' und t6' sehr viel länger als der Abstand zwischen t2' und t1' ist. Dies hat zwei Nachteile. Zum Einen ist die zweite Sequenz mit T1+ΔT deutlich länger als die erste Sequenz T1. Zum Anderen muss für ein weiteres Heben aus Speicher, selbst bei zuvor ablaufenden geschlossenen Senken A2 zunächst der Verdichter 31 betrieben werden, um ausreichend Speicherdruck zur Verfügung zu haben. Dies führt nach gängiger Auslegung dazu, dass zum Einen das Speichervolumen, insbesondere das Speicherbauraumvolumen, für einen wenigstens zweifachen Heben-Vorgang ausgelegt sein muss und zum Anderen der Verdichterbetrieb zur Auffüllung des Speicherdrucks auf einen Solldruck zwischenzeitlich zu erfolgen hat, was eine Heben-Senken-Sequenz zusätzlich verlängert. Das Konzept der Erfindung führt also, wie der Vergleich von Fig. 9A und Fig. 9B zeigt, nicht nur zu einem effektiveren Ausnutzen der Verdichterlaufzeiten und zu einem beständigeren Speicherdruck, sondern außerdem insgesamt zu einer Verkürzung der Zeiten für eine Heben-Senken-Sequenz, die zudem beliebig oft wiederholbar ist weil weitestgehend konstant im Ablauf.

### Bezugszeichenliste (Bestandteil der Beschreibung)

- 0: Ansauganschluss
- 0.3: Filter
- 1: Druckmittelzuführung
- 1.1, 1.2: erster, zweiter Druckmittelladeanschluss
- 2: Druckmittelanschluss
- 3: Entlüftungsanschluss
- 7: Zweiganschluss
- 10.1, 10.2, 10.3, 10.4: Druckluftversorgungsanlage
- 20: Ansaugleitung
- 20.1, 20.2: erste und zweite Druckmittelladeleitung
- 21: Verdichterleitung
- 30.1, 30.2, 30.3, 30.4: Ladeanordnungen
- 31: Verdichter
- 31.1, 31.2: erste, zweite Verdichterstufe
- 41, 42: erste, zweite nennweiteneinstellbare Drossel
- 43, 44: erste, zweite nennweitenfeste Drossel
- 51, 52: erstes, zweites Ladeventil
- 60: pneumatische Hauptleitung
- 61: Rückschlagventil
- 62: Lufttrockner
- 64: Regenerations-Drossel
- 70: Entlüftungsleitung
- 71: Entlüftungsventil
- 71S: Steueranschluss des Entlüftungsventils
- 74: Entlüftungs-Drossel
- 80: Magnetventilanordnung
- 81: Steuerventil
- 90: Pneumatikanlage
- 91: Balg
- 91L: Balgleitung
- 92: Speicher
- 92L: Speicherleitung
- 92ZL.1, 92ZL.2: Ladezweigleitung
- 93: Balgventil
- 94: Speicherventil
- 95, 95.1, 95.2: Galerie, erste, zweite Galerie
- 96, 96.1, 96.2, 96.3: pneumatische Verbindungsleitung, erste, zweite pneumatische Verbindungsleitung, pneumatische Leitung
- 97: Drucksensor
- 97L: Drucksensorleitung
- 98.1: erster Ventilblock
- 98.2: zweiten Ventilblock
- 99: Trennventil
- 100.1, 100.2, 100.3, 100.4: pneumatisches System
- 110, 111, 112, 117: Steuerleitung, Pneumatikleitung
- gDM: geladenes Druckmittel
- tDM: weiteres, insbesondere teilverdichtetes, Druckmittel
- BA1, BA2, BA3: Varianten Senken-Vorgang, Betriebsart BA offen, geschlossen, teilgeschlossen
- A1: offener Senken-Vorgang
- A2: geschlossener Senken-Vorgang
- A3: teilgeschlossener Senken-Vorgang
- A3.1, A3.2: Abschnitte Senken-Vorgang
- F1-HA: flache Flanke der Hinterachse
- F2-HA: steile Flanke der Hinterachse
- VA, HA: Vorderachse, Hinterachse
- BH1, BH2, BH3: Varianten Heben-Vorgang, Betriebsart BA offen, geschlossen, teilgeschlossen
- H1: offener (Verdichter-) Heben-Vorgang
- H2: geschlossener (Speicher-)Heben-Vorgang
- H3: teilgeschlossener (Laden-)Heben-Vorgang
- H3.1, H3.2: Abschnitte Heben-Vorgang
- M: Motor
- N: Niveausignal
- P: Plateau
- RD: Reservoirdruck, Speicherdruck
- RD1, RD2: Druck
- S: Pneumatiksteuermodul
- SA: Verfahrensschritte
- SD1, SL1, SL2, SM, SE, ST: Steuersignale
- t1 ... t9: Zeitpunkte
- T: Periode

## Patentansprüche

1. Druckmittelversorgungsanlage (10.1, 10.2, 10.3, 10.4), insbesondere ausgebildet zum wahlweise offenen, teilgeschlossenen oder geschlossenen Betrieb, zum Betreiben einer Pneumatikanlage mit einem Speicher (92) od. dgl. Druckmittelvorratsbehälter und einer Anzahl von Bälgen (91) od. dgl. Druckmittelkammern, aufweisend:
- eine Ladeanordnung (30.1, 30.2, 30.3, 30.4) mit einem zwei- oder mehrstufigen Verdichter (31)
- eine Druckmittelzuführung (1), an die druckmittelzuführungsseitig die Ladeanordnung (30.1, 30.2, 30.3, 30.4) mit dem zwei- oder mehrstufigen Verdichter (31) angeschlossen ist, der wenigstens eine erste und eine zweite Verdichterstufe (31.1, 31.2) aufweist;
- einen Druckmittelanschluss (2) zur Pneumatikanlage (90.1, 90.2, 90.3, 90.4) und einen Entlüftungsanschluss (3) zur Umgebung, sowie wenigstens einen Druckmittelladeanschluss (1.1, 1.2) zur Pneumatikanlage,
- eine Ansaugleitung (20) ansaugseitig des Verdichters (31) zwischen einem Ansauganschluss (0) zur Umgebung und dem Verdichter (31);
- eine Verdichterleitung (21) zwischen der ersten und der zweiten Verdichterstufe (31.1, 31.2),
- eine pneumatische Hauptleitung (60) zwischen der Druckmittelzuführung (1) und dem Druckmittelanschluss (2),
- eine Entlüftungsleitung (70) zwischen der Druckmittelzuführung (1) und dem Entlüftungsanschluss (3) mit einem Entlüftungsventil (71);
- wenigstens eine Druckmittelladeleitung (20.1, 20.2) zwischen dem wenigstens einen Druckmittelladeanschluss (1.1, 1.2) und der Verdichterleitung (21);
**dadurch gekennzeichnet, dass**
die Ladeanordnung (30.1, 30.2, 30.3, 30.4) ausgebildet ist, zur gleichzeitigen Führung von am wenigstens einen Druckmittelladeanschluss (1.1, 1.2) anstehendem geladenen Druckmittel (gDM) des Druckmittelvorratsbehälters (92) oder einer Druckmittelkammer (91) der Pneumatikanlage (90.1, 90.2, 90.3, 90.4) abhängig vom Schaltzustand eines ersten zur Druckmittelversorgungsanlage gehörenden und in zwei Schaltzustände schaltbaren 2/2-Wege-Ladeventils (51) und von von der ersten Verdichterstufe (31.1) zur Verfügung gestelltem weiteren Druckmittel (tDM) zu der zweiten Verdichterstufe (31.2).

2. Pneumatisches System (100.1, 100.2, 100.3, 100.4) mit einer Druckmittelversorgungsanlage (10.1, 10.2, 10.3, 10.4) und mit einer Pneumatikanlage (90.1, 90.2, 90.3, 90.4) in Form einer Druckmittelfederanlage, die einen Speicher (92) od. dgl. Druckmittelvorratsbehälter und eine Anzahl Bälge (91) od. dgl. Druckmittelkammern aufweist, die Druckmittelversorgungsanlage (10.1, 10.2, 10.3, 10.4), insbesondere ausgebildet zum wahlweise offenen, teilgeschlossenen oder geschlossenen Betrieb, zum Betreiben der Pneumatikanlage, aufweisend:
- eine Ladeanordnung (30.1, 30.2, 30.3, 30.4) mit einem zwei- oder mehrstufigen Verdichter (31);
- eine Druckmittelzuführung (1), an die druckmittelzuführungsseitig die Ladeanordnung (30.1, 30.2, 30.3, 30.4) mit dem zwei- oder mehrstufigen Verdichter (31) angeschlossen ist, der wenigstens eine erste und eine zweite Verdichterstufe (31.1, 31.2) aufweist;
- einen Druckmittelanschluss (2) zur Pneumatikanlage (90.1, 90.2, 90.3, 90.4) und einen Entlüftungsanschluss (3) zur Umgebung, sowie wenigstens einen Druckmittelladeanschluss (1.1, 1.2) zur Pneumatikanlage,
- eine Ansaugleitung (20) ansaugseitig des Verdichters (31) zwischen einem Ansauganschluss (0) zur Umgebung und dem Verdichter (31);
- eine Verdichterleitung (21) zwischen der ersten und der zweiten Verdichterstufe (31.1, 31.2), - eine pneumatische Hauptleitung (60) zwischen der Druckmittelzuführung (1) und dem Druckmittelanschluss (2),
- eine Entlüftungsleitung (70) zwischen der Druckmittelzuführung (1) und dem Entlüftungsanschluss (3) mit einem Entlüftungsventil (71);
- wenigstens eine Druckmittelladeleitung (20.1, 20.2) zwischen dem wenigstens einen Druckmittelladeanschluss (1.1, 1.2) und der Verdichterleitung (21);
**dadurch gekennzeichnet, dass** die Ladeanordnung (30.1, 30.2, 30.3, 30.4) ausgebildet ist, zur gleichzeitigen Führung von am wenigstens einen Druckmittelladeanschluss (1.1, 1.2) anstehendem geladenen Druckmittel (gDM) des Druckmittelvorratsbehälters (92) oder einer Druckmittelkammer (91) der Pneumatikanlage (90.1, 90.2, 90.3, 90.4) abhängig vom Schaltzustand eines ersten zur Druckmittelversorgungsanlage gehörenden und/oder eines zweiten zur Pneumatikanlage gehörenden und jeweils in zwei Schaltzustände schaltbaren 2/2-Wege-Ladeventils (51 und/oder 52) und von von der ersten Verdichterstufe (31.1) zur Verfügung gestelltem weiteren Druckmittel (tDM) zu der zweiten Verdichterstufe (31.2).

3. Pneumatisches System nach Anspruch 2 **dadurch gekennzeichnet, dass** der Druckmittelvorratsbehälter ein Bauraumvolumen unterhalb von zwölf Liter, insbesondere ein Bauraumvolumen zwischen vier bis zwölf Liter, insbesondere ein Bauraumvolumen zwischen vier bis sechs Liter hat.

4. Pneumatisches System nach Anspruch 2 oder 3 **dadurch gekennzeichnet, dass** der Druckmittelvorratsbehälter als Teil der Pneumatikanlage (90.1, 90.2, 90.3, 90.4) über eine Speicherleitung (92L) an eine Galerie (95) angeschlossen ist und wenigstens eine LadeZweigleitung (92ZL.1, 92ZL.2) von einer oder mehrerer der pneumatischen Komponenten abzweigt, die umfassen: einen Speicher (92 in Fig.1), eine pneumatische Leitung (96.3 in Fig. 2) zur Galerie (95.1), eine Galerie (95 in Fig.3),eine Speicherleitung (92L in Fig. 4).

5. Pneumatisches System nach einem der Ansprüche 2 bis 4 **dadurch gekennzeichnet, dass** erste Wegeventile, insbesondere ein Balgventil (93 L) und das erste oder zweite Ladeventil (51, 52), in einem ersten Ventilblock (98.1), insbesondere einem 5er- oder 6er-Block, und/oder zweite Wegeventile, insbesondere ein Speicherventil (94) und/oder ein Trennventil (99), in einem zweiten Ventilblock (98.2), insbesondere einem 2er-Block, zusammengefasst sind.

6. Druckmittelversorgungsanlage nach Anspruch 1 oder pneumatisches System nach einem der vorhergehenden Ansprüche 2-5 **dadurch gekennzeichnet, dass** die Verdichterleitung (21) ausgebildet ist zur gleichzeitigen Führung des geladenen Druckmittels (gDM) und des weiteren Druckmittels (tDM) zu der zweiten Verdichterstufe (31.2).

7. Druckmittelversorgungsanlage nach einem der Ansprüche 1 oder 6 oder pneumatisches System nach einem der vorhergehenden Ansprüche 2-6 **dadurch gekennzeichnet, dass** die Verdichterleitung (21) ausgebildet ist zur Führung des geladenen Druckmittels (gDM) und des weiteren Druckmittels (tDM) zu der zweiten Verdichterstufe (31.2) frei von Rückhaltedruck.

8. Druckmittelversorgungsanlage nach einem der Ansprüche 1, 6 oder 7 oder pneumatisches System nach einem der vorhergehenden Ansprüche 2-7 **dadurch gekennzeichnet, dass** die Verdichterleitung (21) frei von einem Sperrmittel und/oder frei von einem Regelmittel ausgebildet ist.

9. Druckmittelversorgungsanlage nach einem der Ansprüche 1 oder 6-8 oder pneumatisches System nach einem der vorhergehenden Ansprüche 2-8 **dadurch gekennzeichnet, dass** eine erste Druckmittelladeleitung (20.1) zwischen einem ersten Druckmittelladeanschluss (1.1) und der Verdichterleitung (21) eine erste Drossel (41, 43) und/oder eine zweite Druckmittelladeleitung (20.2) zwischen einem zweiten Druckmittelladeanschluss (1.2) und der Verdichterleitung (21) eine zweite Drossel (42, 44) aufweist, wobei eine erste Drossel (41, 43) und/oder eine zweite Drossel (42, 44) eine Nennweite haben, die ausgebildet ist, eine Druckabsenkung in der ersten und/oder zweiten Druckmittelladeleitung (20.1, 20.2) gegenüber der Verdichterleitung (21) zu bewirken.

10. Druckmittelversorgungsanlage oder pneumatisches System nach Anspruch 9 **dadurch gekennzeichnet, dass** eine Druckabsenkung mit einer Amplitude zwischen einem Drittel und einer Hälfte eines Drucks in der ersten und/oder zweiten Druckmittelladeleitung (20.1, 20.2) bewirkbar ist, insbesondere die Amplitude der Druckabsenkung im Bereich zwischen 8 bis 10 bar liegt, insbesondere die Druckabsenkung von einem Bereich zwischen 15-25 bar in einen Bereich zwischen 5-15 bar bewirkbar ist, geregelt oder ungeregelt mittels einer Nennweite einer ersten und/oder zweiten Drossel (41, 42, 43, 44).

11. Druckmittelversorgungsanlage oder pneumatisches System nach einem der vorhergehenden Ansprüche 9 oder 10 **dadurch gekennzeichnet, dass** die erste Drossel (41, 43) und/oder die zweite Drossel (42, 44) eine Nennweite haben, die im Bereich zwischen 0,5 mm bis 1,5 mm, insbesondere im Bereich zwischen 0,6 mm und 1,2 mm, insbesondere im Bereich zwischen 0,6 mm und 0,8 mm liegt.

12. Druckmittelversorgungsanlage oder pneumatisches System nach einem der vorhergehenden Ansprüche 9-11 **dadurch gekennzeichnet, dass** die erste und/oder zweite Drossel (43, 44) eine feste Nennweite haben oder die erste und/oder zweite Drossel (41, 42) eine einstellbare Nennweite haben.

13. Druckmittelversorgungsanlage nach einem der Ansprüche 1 oder 6-12 oder pneumatisches System nach einem der vorhergehenden Ansprüche 2-12 **dadurch gekennzeichnet, dass** an einen ersten Druckmittelladeanschluss (1.1) das erste Ladeventil (51) und/oder an einen zweiten Druckmittelladeanschluss (1.2) das zweite Ladeventil (52) angeschlossen ist oder anschließbar ist.

14. Verfahren zum Betreiben einer Druckmittelversorgungsanlage nach einem der Ansprüche 1 oder 6-13 oder zum Betreiben eines pneumatischen Systems mit einer Druckmittelversorgungsanlage und mit einer Pneumatikanlage nach einem der Ansprüche 2-13, insbesondere im wahlweise offenen, teilgeschlossenen oder geschlossenen Betrieb, wobei das Verfahren die Schritte aufweist: - gleichzeitiges Führen von am wenigstens einen Druckmittelladeanschluss (1.1, 1.2) anstehendem geladenen Druckmittel (gDM) des Druckmittelvorratsbehälters (92) oder einer Druckmittelkammer (91) der Pneumatikanlage (90.1, 90.2, 90.3, 90.4) abhängig vom Schaltzustand eines ersten und/oder zweiten Ladeventils (51, 52) und von von einer ersten Verdichterstufe (31.1) eines Verdichters (31) zur Verfügung gestelltem weiteren Druckmittel (tDM) in Führungsrichtung zur zweiten Verdichterstufe (31.2) eines Verdichters (31).

15. Verfahren nach Anspruch 14 **dadurch gekennzeichnet, dass** das geladene Druckmittel (gDM) und das weitere Druckmittel (tDM) frei von einem gegen Führungsrichtung wirkenden Rückhaltedruck geführt wird, insbesondere gleichzeitig oder nacheinander über die wenigstens eine Druckmittelladeleitung (20.1, 20.2) und/oder gleichzeitig oder nacheinander über die Verdichterleitung (21).

16. Verfahren nach Anspruch 14 oder 15 **dadurch gekennzeichnet, dass** das geladene Druckmittel (gDM) von dem wenigstens einen Druckmittelladeanschluss (1.1, 1.2) der zweiten Verdichterstufe (31.2) zugeführt wird, und dieses weiter verdichtet über die pneumatische Hauptleitung (60) zwischen der Druckmittelzuführung (1) und dem Druckmittelanschluss (2) der Pneumatikanlage (90.1, 90.2, 90.3, 90.4) zugeführt wird.

17. Verfahren nach einem der Ansprüche 14 bis 16 **dadurch gekennzeichnet, dass** das weitere Druckmittel (tDM) von dem Ansauganschluss (0) über die erste Verdichterstufe (31.1) zur Verfügung gestellt wird, insbesondere über die Ansaugleitung (20) und die Verdichterleitung (21), und der zweiten Verdichterstufe (31.2) zugeführt wird, und dieses weiter verdichtet über die pneumatische Hauptleitung (60) zwischen der Druckmittelzuführung (1) und dem Druckmittelanschluss (2) der Pneumatikanlage (90.1, 90.2, 90.3, 90.4) zugeführt wird.

18. Verfahren nach einem der Ansprüche 14 bis 17 **dadurch gekennzeichnet, dass**
- für einen mittels der Pneumatikanlage umsetzbaren Senken-Vorgang die Druckmittelversorgungsanlage wahlweise offen (A1), geschlossen (A2) oder teilgeschlossen (A3) betrieben wird,; und/oder
- für einen mittels der Pneumatikanlage bewirkten Heben-Vorgang die Druckmittelversorgungsanlage wahlweise offen (H1), geschlossen (H2) oder teilgeschlossen (H3) betrieben wird.

19. Verfahren nach einem der Ansprüche 14 bis 18 **dadurch gekennzeichnet, dass** für einen Senken-Vorgang die Druckmittelversorgungsanlage betrieben wird, wahlweise offen unter Ablassen von Druckmittel aus einer Druckmittelkammer in den Entlüftungsanschluss (3) und/oder
geschlossen unter Ablassen von Druckmittel aus einer Druckmittelkammer in den Druckmittelvorratsbehälter über den Verdichter (31) unter Führen von am wenigstens einen Druckmittelladeanschluss (1.1, 1.2) anstehendem geladenen Druckmittel (gDM) und unter Führen von von der ersten Verdichterstufe (31.1) zur Verfügung gestelltem weiteren Druckmittel (tDM) in Führungsrichtung zur zweiten Verdichterstufe (31.2) und/oder, insbesondere unter Beteiligung beider vorgenannter Betriebsarten, teilgeschlossen unter Ablassen von Druckmittel aus einer Druckmittelkammer in den Entlüftungsanschluss (3) und aus einer Druckmittelkammer in den Druckmittelvorratsbehälter in beliebiger Reihenfolge nacheinander oder wenigstens zeitweise gleichzeitig.

20. Verfahren nach einem der Ansprüche 14 bis 19 **dadurch gekennzeichnet, dass** für einen Heben-Vorgang die Druckmittelversorgungsanlage betrieben wird, wahlweise
offen nur unter Fördern von Druckmittel in den Druckmittelanschluss (2) über den Verdichter (31), und/oder
geschlossen unter Ablassen von Druckmittel aus einem Druckmittelvorratsbehälter in eine Druckmittelkammer über eine Galerie (95), und/oder
,insbesondere unter Beteiligung beider vorgenannter Betriebsarten, teilgeschlossen unter Führen von am wenigstens einen Druckmittelladeanschluss (1.1, 1.2) anstehendem geladenen Druckmittel (gDM) und von von der ersten Verdichterstufe (31.1) zur Verfügung gestelltem weiteren Druckmittel (tDM) in Führungsrichtung zur zweiten Verdichterstufe (31.2) nacheinander oder wenigstens zeitweise gleichzeitig.

21. Verfahren nach einem der Ansprüche 14 bis 20 **dadurch gekennzeichnet, dass** im Rahmen eines teilgeschlossenen Heben-Vorgangs und/oder Senken-Vorgangs ein Entlüftungsvorgang in den Entlüftungsanschluss (3) erfolgt unter Regeneration eines Trockners (62) in der pneumatischen Hauptleitung (60).

22. Verfahren nach Anspruch 21 **dadurch gekennzeichnet, dass** im Rahmen der Regeneration des Trockners (62) eine Absenkung des in der Pneumatikanlage vorhandenen Druckvolumens auf ein Solldruckvolmen erfolgt, wobei insbesondere zumindest ein Teil der durch die erste Verdichterstufe (31.1) während des teilgeschlossenen Heben-Vorgangs und/oder Senken-Vorgangs hinzu geförderten Druckvolumens für die Regeneration des Trockners (62) verwendet wird.

## Claims

1. Pressure medium supply installation (10.1, 10.2, 10.3, 10.4), in particular designed for selectively open, partially closed or closed operation, for the operation of a pneumatic installation which has an accumulator (92) or similar pressure medium storage container and has a number of bellows (91) or similar pressure medium chambers, having:
- a charging arrangement (30.1, 30.2, 30.3, 30.4), which has a two-stage or multistage compressor (31);
- a pressure medium feed (1), to which the charging arrangement (30.1, 30.2, 30.3, 30.4) having the two-stage or multistage compressor (31) is connected on the pressure medium feed side, said compressor having at least a first and a second compressor stage (31.1, 31.2) ;
- a pressure medium connection (2) to the pneumatic installation (90.1, 90.2, 90.3, 90.4) and a venting connection (3) to the surroundings, and also at least one pressure medium charging connection (1.1, 1.2) to the pneumatic installation,
- a suction line (20) on the suction side of the compressor (31) between a suction connection (0) to the surroundings and the compressor (31);
- a compressor line (21) between the first and second compressor stages (31.1, 31.2),
- a pneumatic main line (60) between the pressure medium feed (1) and the pressure medium connection (2),
- a venting line (70) between the pressure medium feed (1) and the venting connection (3), with a venting valve (71);
- at least one pressure medium charging line (20.1, 20.2) between the at least one pressure medium charging connection (1.1, 1.2) and the compressor line (21);
**characterized in that**
the charging arrangement (30.1, 30.2, 30.3, 30.4) is designed for simultaneously guiding charged pressure medium (gDM) of the pressure medium storage container (92), or a pressure medium chamber (91), of the pneumatic installation (90.1, 90.2, 90.3, 90.4), which charged pressure medium is present at the at least one pressure medium charging connection (1.1, 1.2), in a manner dependent on the switching state of a first 2/2 directional charging valve (51), which belongs to the pressure medium supply installation and is able to be switched into two switching states, and further pressure medium (tDM), which is provided by the first compressor stage (31.1), to the second compressor stage (31.2) .

2. Pneumatic system (100.1, 100.2, 100.3, 100.4) having a pressure medium supply installation (10.1, 10.2, 10.3, 10.4) and having a pneumatic installation (90.1, 90.2, 90.3, 90.4) in the form of a pressure medium suspension installation, which has an accumulator (92) or similar pressure medium storage container and has a number of bellows (91) or similar pressure medium chambers, the pressure medium supply installation (10.1, 10.2, 10.3, 10.4), in particular designed for selectively open, partially closed or closed operation, for the operation of the pneumatic installation, having:
- a charging arrangement (30.1, 30.2, 30.3, 30.4), which has a two-stage or multistage compressor (31);
- a pressure medium feed (1), to which the charging arrangement (30.1, 30.2, 30.3, 30.4) having the two-stage or multistage compressor (31) is connected on the pressure medium feed side, said compressor having at least a first and a second compressor stage (31.1, 31.2) ;
- a pressure medium connection (2) to the pneumatic installation (90.1, 90.2, 90.3, 90.4) and a venting connection (3) to the surroundings, and also at least one pressure medium charging connection (1.1, 1.2) to the pneumatic installation,
- a suction line (20) on the suction side of the compressor (31) between a suction connection (0) to the surroundings and the compressor (31);
- a compressor line (21) between the first and second compressor stages (31.1, 31.2),
- a pneumatic main line (60) between the pressure medium feed (1) and the pressure medium connection (2),
- a venting line (70) between the pressure medium feed (1) and the venting connection (3), with a venting valve (71);
- at least one pressure medium charging line (20.1, 20.2) between the at least one pressure medium charging connection (1.1, 1.2) and the compressor line (21); **characterized in that** the charging arrangement (30.1, 30.2, 30.3, 30.4) is designed for simultaneously guiding charged pressure medium (gDM) of the pressure medium storage container (92), or a pressure medium chamber (91), of the pneumatic installation (90.1, 90.2, 90.3, 90.4), which charged pressure medium is present at the at least one pressure medium charging connection (1.1, 1.2), in a manner dependent on the switching state of a first and/or second 2/2 directional charging valve (51 and/or 52), which first 2/2 directional charging valve belongs to the pressure medium supply installation and which second 2/2 directional charging valve belongs to the pneumatic installation and which 2/2 directional charging valves are each able to be switched into two switching states, and further pressure medium (tDM), which is provided by the first compressor stage (31.1), to the second compressor stage (31.2).

3. Pneumatic system according to Claim 2, **characterized in that** the pressure medium storage container has a structural space volume of below twelve litres, in particular a structural space volume of between four and twelve litres, in particular a structural space volume of between four and six litres.

4. Pneumatic system according to Claim 2 or 3, **characterized in that**, as part of the pneumatic installation (90.1, 90.2, 90.3, 90.4), the pressure medium storage container is connected to a gallery (95) via an accumulator line (92L), and at least one charging branch line (92ZL.1, 92ZL.2) branches off from one of more of the pneumatic components, which comprise: an accumulator (92 in Figure 1), a pneumatic line (96.3 in Figure 2) to the gallery (95.1), a gallery (95 in Figure 3) and an accumulator line (92L in Figure 4).

5. Pneumatic system according to one of Claims 2 to 4, **characterized in that** first directional valves, in particular a bellows valve (93L) and the first or second charging valve (51, 52), are combined in a first valve block (98.1), in particular a 5- or 6-valve block, and/or second directional valves, in particular an accumulator valve (94) and/or a separation valve (99), are combined in a second valve block (98.2), in particular a 2-valve block.

6. Pressure medium supply installation according to Claim 1 or pneumatic system according to one of the preceding Claims 2-5, **characterized in that** the compressor line (21) is designed for simultaneously guiding the charged pressure medium (gDM) and the further pressure medium (tDM) to the second compressor stage (31.2).

7. Pressure medium supply installation according to either of Claims 1 and 6 or pneumatic system according to one of the preceding Claims 2-6, **characterized in that** the compressor line (21) is designed for guiding the charged pressure medium (gDM) and the further pressure medium (tDM) to the second compressor stage (31.2) in a manner free of retention pressure.

8. Pressure medium supply installation according to one of Claims 1, 6 and 7 or pneumatic system according to one of the preceding Claims 2-7, **characterized in that** the compressor line (21) is designed to be free of a blocking means and/or free of a regulating means.

9. Pressure medium supply installation according to one of Claims 1 and 6-8 or pneumatic system according to one of the preceding Claims 2-8, **characterized in that** a first pressure medium charging line (20.1) between a first pressure medium charging connection (1.1) and the compressor line (21) has a first throttle (41, 43), and/or a second pressure medium charging line (20.2) between a second pressure medium charging connection (1.2) and the compressor line (21) has a second throttle (42, 44), wherein a first throttle (41, 43) and/or a second throttle (42, 44) have/has a nominal width which is formed to bring about a pressure reduction in the first and/or second pressure medium charging line (20.1, 20.2) in relation to the compressor line (21).

10. Pressure medium supply installation or pneumatic system according to Claim 9, **characterized in that** a pressure reduction with an amplitude of between one third and half of a pressure in the first and/or second pressure medium charging line (20.1, 20.2) is able to be brought about, in particular the amplitude of the pressure reduction lies in a range between 8 and 10 bar, in particular it is possible to bring about the pressure reduction from a range between 15 and 25 bar to a range between 5 and 15 bar, said pressure reduction being realized in a regulated or unregulated manner by means of a nominal width of a first and/or second throttle (41, 42, 43, 44).

11. Pressure medium supply installation or pneumatic system according to either of the preceding Claims 9 and 10, **characterized in that** the first throttle (41, 43) and/or the second throttle (42, 44) have/has a nominal width which lies in the range between 0.5 mm and 1.5 mm, in particular in the range between 0.6 mm and 1.2 mm, in particular in the range between 0.6 mm and 0.8 mm.

12. Pressure medium supply installation or pneumatic system according to one of the preceding Claims 9-11, **characterized in that** the first and/or second throttle (43, 44) have/has a fixed nominal width, or the first and/or second throttle (41, 42) have/has an adjustable nominal width.

13. Pressure medium supply installation according to one of Claims 1 and 6-12 or pneumatic system according to one of the preceding Claims 2-12, **characterized in that** the first charging valve (51) is connected or able to be connected to a first pressure medium charging connection (1.1), and/or the second charging valve (52) is connected or able to be connected to a second pressure medium charging connection (1.2).

14. Method for operating a pressure medium supply installation according to one of Claims 1 and 6-13, or for operating a pneumatic system having a pressure medium supply installation and having a pneumatic installation according to one of Claims 2-13, in particular during selectively open, partially closed or closed operation, wherein the method comprises the step of: simultaneously guiding charged pressure medium (gDM) of the pressure medium storage container (92), or a pressure medium chamber (91), of the pneumatic installation (90.1, 90.2, 90.3, 90.4), which charged pressure medium is present at the at least one pressure medium charging connection (1.1, 1.2), in a manner dependent on the switching state of a first and/or second charging valve (51, 52), and further pressure medium (tDM), which is provided by a first compressor stage (31.1) of a compressor (31), in a guiding direction to the second compressor stage (31.2) of a compressor (31).

15. Method according to Claim 14, **characterized in that** the charged pressure medium (gDM) and the further pressure medium (tDM) are guided in a manner free of a retention pressure acting counter to the guiding direction, in particular simultaneously or one after the other via the at least one pressure medium charging line (20.1, 20.2) and/or simultaneously or one after the other via the compressor line (21).

16. Method according to Claim 14 or 15, **characterized in that** the charged pressure medium (gDM) is supplied to the second compressor stage (31.2) from the at least one pressure medium charging connection (1.1, 1.2), and said charged pressure medium is supplied in further compressed form to the pneumatic installation (90.1, 90.2, 90.3, 90.4) via the pneumatic main line (60) between the pressure medium feed (1) and the pressure medium connection (2).

17. Method according to one of Claims 14 to 16, **characterized in that** the further pressure medium (tDM) is provided from the suction connection (0) via the first compressor stage (31.1), in particular via the suction line (20) and the compressor line (21), and is supplied to the second compressor stage (31.2), and said further pressure medium is supplied in further compressed form to the pneumatic installation (90.1, 90.2, 90.3, 90.4) via the pneumatic main line (60) between the pressure medium feed (1) and the pressure medium connection (2).

18. Method according to one of Claims 14 to 17, **characterized in that**,
- for a lowering process realizable by means of the pneumatic installation, the pressure medium supply installation is selectively operated in a manner open (A1), closed (A2) or partially closed (A3); and/or,
- for a lifting process brought about by means of the pneumatic installation, the pressure medium supply installation is selectively operated in a manner open (H1), closed (H2) or partially closed (H3).

19. Method according to one of Claims 14 to 18, **characterized in that**, for a lowering process, the pressure medium storage container is selectively operated in a manner open, with discharge of pressure medium from a pressure medium chamber into the venting connection (3), and/or closed, with discharge of pressure medium from a pressure medium chamber into the pressure medium storage container via the compressor (31), with guidance of charged pressure medium (gDM), which is present at the at least one pressure medium charging connection (1.1, 1.2), and with guidance of further pressure medium (tDM), which is provided by the first compressor stage (31.1), in a guiding direction to the second compressor stage (31.2), and/or, in particular with both of the aforementioned types of operation involved, partially closed, with discharge of pressure medium from a pressure medium chamber into the venting connection (3) and from a pressure medium chamber into the pressure medium storage container one after the other in any order or, at least intermittently, simultaneously.

20. Method according to one of Claims 14 to 19, **characterized in that**, for a lifting process, the pressure medium supply installation is selectively operated in a manner open, only with conveyance of pressure medium into the pressure medium connection (2) via the compressor (31), and/or closed, with discharge of pressure medium from a pressure medium storage container into a pressure medium chamber via a gallery (95), and/or, in particular with both of the aforementioned types of operation involved, partially closed, with guidance of charged pressure medium (gDM), which is present at the at least one pressure medium charging connection (1.1, 1.2), and further pressure medium (tDM), which is provided by the first compressor stage (31.1), in a guiding direction to the second compressor stage (31.2) one after the other or, at least intermittently, simultaneously.

21. Method according to one of Claims 14 to 20, **characterized in that**, during a partially closed lifting process and/or lowering process, a process of venting into the venting connection (3) is realized with regeneration of a dryer (62) in the pneumatic main line (60).

22. Method according to Claim 21, **characterized in that**, during the regeneration of the dryer (62), the pressure volume present in the pneumatic installation is reduced to a target pressure volume, wherein, in particular, for the regeneration of the dryer (62), use is made of at least a part of the pressure volume that is additionally conveyed through the first compressor stage (31.1) during the partially closed lifting process and/or lowering process.

## Revendications

1. Dispositif d'alimentation en fluide sous pression (10.1, 10.2, 10.3, 10.4), en particulier réalisé pour le fonctionnement sélectivement ouvert, partiellement fermé ou fermé, permettant de faire fonctionner un dispositif pneumatique comprenant un accumulateur (92) ou un réservoir de stockage de fluide sous pression similaire et un certain nombre de soufflets (91) ou chambres de fluide sous pression similaires, comprenant
- un ensemble de suralimentation (30.1, 30.2, 30.3, 30.4) comprenant un compresseur (31) à deux étages ou à plusieurs étages,
- une alimentation en fluide sous pression (1), à laquelle est raccordé, du côté de l'alimentation en fluide sous pression, l'ensemble de suralimentation (30.1, 30.2, 30.3, 30.4) comprenant le compresseur (31) à deux étages ou à plusieurs étages, lequel compresseur comprend au moins un premier et un deuxième étage de compresseur (31.1, 31.2) ;
- un raccord de fluide sous pression (2) vers le dispositif pneumatique (90.1, 90.2, 90.3, 90.4) et un raccord de purge (3) vers l'environnement, ainsi qu'au moins un raccord de suralimentation de fluide sous pression (1.1, 1.2) vers le dispositif pneumatique,
- une conduite d'aspiration (20) du côté de l'aspiration du compresseur (31) entre un raccord d'aspiration (0) vers l'environnement et le compresseur (31) ;
- une conduite de compresseur (21) entre le premier et le deuxième étage de compresseur (31.1, 31.2),
- une conduite principale pneumatique (60) entre l'alimentation en fluide sous pression (1) et le raccord de fluide sous pression (2),
- une conduite de purge (70) entre l'alimentation en fluide sous pression (1) et le raccord de purge (3) comprenant une soupape de purge (71) ;
- au moins une conduite de suralimentation de fluide sous pression (20.1, 20.2) entre ledit au moins un raccord de suralimentation de fluide sous pression (1.1, 1.2) et la conduite de compresseur (21) ;
**caractérisé en ce que**
l'ensemble de suralimentation (30.1, 30.2, 30.3, 30.4) est réalisé pour guider simultanément le fluide sous pression (gDM) surcomprimé, appliqué audit au moins un raccord de suralimentation de fluide sous pression (1.1, 1.2), du réservoir de stockage de fluide sous pression (92) ou d'une chambre de fluide sous pression (91) du dispositif pneumatique (90.1, 90.2, 90.3, 90.4) en fonction de l'état de commutation d'une première soupape de suralimentation à 2/2 voies (51) appartenant au dispositif d'alimentation en fluide sous pression et pouvant être commutée entre deux états de commutation et l'autre fluide sous pression (tDM) fourni par le premier étage de compresseur (31.1) jusqu'au deuxième étage de compresseur (31.2).

2. Système pneumatique (100.1, 100.2, 100.3, 100.4) comprenant un dispositif d'alimentation en fluide sous pression (10.1, 10.2, 10.3, 10.4) et un dispositif pneumatique (90.1, 90.2, 90.3, 90.4) sous la forme d'un système de suspension à fluide sous pression qui comprend un accumulateur (92) ou réservoir de stockage de fluide sous pression similaire et un certain nombre de soufflets (91) ou chambres de fluide sous pression similaires, le dispositif d'alimentation en fluide sous pression (10.1, 10.2, 10.3, 10.4), en particulier réalisé pour le fonctionnement sélectivement ouvert, partiellement fermé ou fermé, comprenant, pour le fonctionnement du dispositif pneumatique :
- un ensemble de suralimentation (30.1, 30.2, 30.3, 30.4) comprenant un compresseur (31) à deux étages ou à plusieurs étages,
- une alimentation en fluide sous pression (1), à laquelle est raccordé, du côté de l'alimentation en fluide sous pression, l'ensemble de suralimentation (30.1, 30.2, 30.3, 30.4) comprenant le compresseur (31) à deux étages ou à plusieurs étages, lequel compresseur comprend au moins un premier et un deuxième étage de compresseur (31.1, 31.2) ;
- un raccord de fluide sous pression (2) vers le dispositif pneumatique (90.1, 90.2, 90.3, 90.4) et un raccord de purge (3) vers l'environnement, ainsi qu'au moins un raccord de suralimentation de fluide sous pression (1.1, 1.2) vers le dispositif pneumatique,
- une conduite d'aspiration (20) du côté de l'aspiration du compresseur (31) entre un raccord d'aspiration (0) vers l'environnement et le compresseur (31) ;
- une conduite de compresseur (21) entre le premier et le deuxième étage de compresseur (31.1, 31.2) ;
- une conduite principale pneumatique (60) entre l'alimentation en fluide sous pression (1) et le raccord de fluide sous pression (2),
- une conduite de purge (70) entre l'alimentation en fluide sous pression (1) et le raccord de purge (3) comprenant une soupape de purge (71) ;
- au moins une conduite de suralimentation de fluide sous pression (20.1, 20.2) entre ledit au moins un raccord de suralimentation de fluide sous pression (1.1, 1.2) et la conduite de compresseur (21) ; **caractérisé en ce que** l'ensemble de suralimentation (30.1, 30.2, 30.3, 30.4) est réalisé pour guider simultanément le fluide sous pression (gDM) surcomprimé, appliqué audit au moins un raccord de suralimentation de fluide sous pression (1.1, 1.2), du réservoir de stockage de fluide sous pression (92) ou d'une chambre de fluide sous pression (91) du dispositif pneumatique (90.1, 90.2, 90.3, 90.4) en fonction de l'état de commutation d'une première soupape de suralimentation à 2/2 voies appartenant au dispositif d'alimentation en fluide sous pression et/ou d'une deuxième soupape de suralimentation à 2/2 voies appartenant au dispositif pneumatique (51 et/ou 52) et pouvant être commutée respectivement entre deux états de commutation et l'autre fluide sous pression (tDM) fourni par le premier étage de compresseur (31.1) jusqu'au deuxième étage de compresseur (31.2).

3. Système pneumatique selon la revendication 2, **caractérisé en ce que** le réservoir de stockage de fluide sous pression présente un volume d'espace d'installation de douze litres, en particulier un volume d'espace d'installation de quatre à douze litres, en particulier un volume d'espace d'installation de quatre à six litres.

4. Système pneumatique selon la revendication 2 ou 3, **caractérisé en ce que** le réservoir de stockage de fluide sous pression est, en tant que partie du dispositif pneumatique (90.1, 90.2, 90.3, 90.4), raccordé à une galerie (95) par le biais d'une conduite d'accumulateur (92L) et au moins une conduite de dérivation de suralimentation (92ZL.1, 92ZL.2) bifurque à partir d'un ou de plusieurs des composants pneumatiques qui comportent : un accumulateur (92 dans la figure 1), une conduite pneumatique (96.3 dans la figure 2) vers la galerie (95.1), une galerie (95 dans la figure 3), une conduite d'accumulateur (92L dans la figure 4).

5. Système pneumatique selon l'une des revendications 2 à 4, **caractérisé en ce que** des premiers distributeurs, en particulier une soupape de soufflet (93L) et la première ou la deuxième soupape de suralimentation (51, 52), sont groupés en un premier bloc de soupapes (98.1), en particulier un bloc à 5 ou 6 soupapes, et/ou des deuxièmes distributeurs, en particulier une soupape d'accumulateur (94) et/ou une soupape de séparation (99), sont groupés en un deuxième bloc de soupapes (98.2), en particulier un bloc à 2 soupapes.

6. Dispositif d'alimentation en fluide sous pression selon la revendication 1 ou système pneumatique selon l'une des revendications précédentes 2 à 5, **caractérisé en ce que** la conduite de compresseur (21) est réalisée pour guider simultanément le fluide sous pression surcomprimé (gDM) et l'autre fluide sous pression (tDM) jusqu'au deuxième étage de compresseur (31.2).

7. Dispositif d'alimentation en fluide sous pression selon la revendication 1 ou 6 ou système pneumatique selon l'une des revendications précédentes 2 à 6, **caractérisé en ce que** la conduite de compresseur (21) est réalisée pour le guidage du fluide sous pression surcomprimé (gDM) et de l'autre fluide sous pression (tDM) jusqu'au deuxième étage de compresseur (31.2) sans pression de retenue.

8. Dispositif d'alimentation en fluide sous pression selon l'une des revendications 1, 6 ou 7 ou système pneumatique selon l'une des revendications précédentes 2 à 7, **caractérisé en ce que** la conduite de compresseur (21) est réalisée sans moyen d'arrêt et/ou sans moyen de régulation.

9. Dispositif d'alimentation en fluide sous pression selon l'une des revendications 1 ou 6 à 8 ou système pneumatique selon l'une des revendications précédentes 2 à 8, **caractérisé en ce qu'**une première conduite de suralimentation de fluide sous pression (20.1) comprend, entre un premier raccord de suralimentation de fluide sous pression (1.1) et la conduite de compresseur (21), un premier étranglement (41, 43) et/ou une deuxième conduite de suralimentation de fluide sous pression (20.2) comprend, entre un deuxième raccord de suralimentation de fluide sous pression (1.2) et la conduite de compresseur (21), un deuxième étranglement (42, 44), un premier étranglement (41, 43) et/ou un deuxième étranglement (42, 44) présentant un diamètre nominal qui est conçu pour provoquer une réduction de pression dans la première et/ou la deuxième conduite de suralimentation de fluide sous pression (20.1, 20.2) par rapport à la conduite de compresseur (21).

10. Dispositif d'alimentation en fluide sous pression ou système pneumatique selon la revendication 9, **caractérisé en ce qu'**une réduction de pression présentant une amplitude entre un tiers et la moitié d'une pression peut être provoquée dans la première et/ou la deuxième conduite de suralimentation de fluide sous pression (20.1, 20.2), en particulier l'amplitude de la réduction de pression est comprise dans la plage de 8 à 10 bars, en particulier la réduction de pression peut être provoquée d'une plage de 15 à 25 bars à une plage de 5 à 15 bars, de manière régulée ou non régulée au moyen d'un diamètre nominal d'un premier et/ou d'un deuxième étranglement (41, 42, 43, 44).

11. Dispositif d'alimentation en fluide sous pression ou système pneumatique selon l'une des revendications précédentes 9 et 10, **caractérisé en ce que** le premier étranglement (41, 43) et/ou le deuxième étranglement (42, 44) présentent un diamètre nominal qui est compris dans la plage de 0,5 mm à 1,5 mm, en particulier dans la plage de 0,6 mm à 1,2 mm, en particulier dans la plage de 0,6 mm à 0,8 mm.

12. Dispositif d'alimentation en fluide sous pression ou système pneumatique selon l'une des revendications précédentes 9 à 11, **caractérisé en ce que** le premier et/ou le deuxième étranglement (43, 44) présentent un diamètre nominal fixe ou le premier et/ou le deuxième étranglement (41, 42) présentent un diamètre nominal réglable.

13. Dispositif d'alimentation en fluide sous pression selon l'une des revendications 1 ou 6 à 12 ou système pneumatique selon l'une des revendications précédentes 2 à 12, **caractérisé en ce que** la première soupape de suralimentation (51) est ou peut être raccordée à un premier raccord de suralimentation de fluide sous pression (1.1) et/ou la deuxième soupape de suralimentation (52) est ou peut être raccordée à un deuxième raccord de suralimentation de fluide sous pression (1.2).

14. Procédé de fonctionnement d'un dispositif d'alimentation en fluide sous pression selon l'une des revendications 1 ou 6 à 13 ou de fonctionnement d'un système pneumatique comprenant un dispositif d'alimentation en fluide sous pression et un dispositif pneumatique selon l'une des revendications 2 à 13, en particulier en fonctionnement sélectivement ouvert, partiellement fermé ou fermé, le procédé comprenant l'étape consistant à : - guider simultanément le fluide sous pression (gDM) surcomprimé, appliqué audit au moins un raccord de suralimentation de fluide sous pression (1.1, 1.2), du réservoir de stockage de fluide sous pression (92) ou d'une chambre de fluide sous pression (91) du dispositif pneumatique (90.1, 90.2, 90.3, 90.4) en fonction de l'état de commutation d'une première et/ou d'une deuxième soupape de suralimentation (51, 52) et l'autre fluide sous pression (tDM) fourni par un premier étage de compresseur (31.1) d'un compresseur (31) dans le sens de guidage jusqu'au deuxième étage de compresseur (31.2) d'un compresseur (31).

15. Procédé selon la revendication 14, **caractérisé en ce que** le fluide sous pression surcomprimé (gDM) et l'autre fluide sous pression (tDM) sont guidés sans pression de retenue agissant en sens inverse au sens de guidage, en particulier simultanément ou tour à tour par le biais de ladite au moins une conduite de suralimentation de fluide sous pression (20.1, 20.2) et/ou simultanément ou tour à tour par le biais de la conduite de compresseur (21).

16. Procédé selon la revendication 14 ou 15, **caractérisé en ce que** le fluide sous pression surcomprimé (gDM) est acheminé à partir dudit au moins un raccord de suralimentation de fluide sous pression (1.1, 1.2) jusqu'au deuxième étage de compresseur (31.2), et ce fluide sous pression est acheminé, de manière comprimée davantage, par le biais de la conduite principale pneumatique (60) entre l'alimentation en fluide sous pression (1) et le raccord de fluide sous pression (2) jusqu'au dispositif pneumatique (90.1, 90.2, 90.3, 90.4).

17. Procédé selon l'une des revendications 14 à 16, **caractérisé en ce que** l'autre fluide sous pression (tDM) est fourni à partir du raccord d'aspiration (0) par le biais du premier étage de compresseur (31.1), en particulier par le biais de la conduite d'aspiration (20) et de la conduite de compresseur (21), et est acheminé jusqu'au deuxième étage de compresseur (31.2), et cet autre fluide sous pression est acheminé, de manière comprimée davantage, par le biais de la conduite principale pneumatique (60) entre l'alimentation en fluide sous pression (1) et le raccord de fluide sous pression (2) jusqu'au dispositif pneumatique (90.1, 90.2, 90.3, 90.4).

18. Procédé selon l'une des revendications 14 à 17, **caractérisé en ce que**
- pour une opération d'abaissement pouvant être réalisée au moyen du dispositif pneumatique, le dispositif d'alimentation en fluide sous pression fonctionne sélectivement de manière ouverte (A1), fermée (A2) ou partiellement fermée (A3) ; et/ou
- pour une opération de levage provoquée au moyen du dispositif pneumatique, le dispositif d'alimentation en fluide sous pression fonctionne sélectivement de manière ouverte (H1), fermée (H2) ou partiellement fermée (H3).

19. Procédé selon l'une des revendications 14 à 18, **caractérisé en ce que** pour une opération d'abaissement, le dispositif d'alimentation en fluide sous pression fonctionne sélectivement
de manière ouverte en évacuant le fluide sous pression hors d'une chambre de fluide sous pression dans le raccord de purge (3) et/ou
de manière fermée en évacuant le fluide sous pression hors d'une chambre de fluide sous pression dans le réservoir de stockage de fluide sous pression par le biais du compresseur (31) en guidant le fluide sous pression surcomprimé (gDM) appliqué audit au moins un raccord de suralimentation de fluide sous pression (1.1, 1.2) et en guidant l'autre fluide sous pression (tDM) fourni par le premier étage de compresseur (31.1) dans le sens de guidage jusqu'au deuxième étage de compresseur (31.2) et/ou,
en particulier en faisant intervenir les deux modes de fonctionnement susmentionnés, de manière partiellement fermée en évacuant le fluide sous pression hors d'une chambre de fluide sous pression dans le raccord de purge (3) et hors d'une chambre de fluide sous pression dans le réservoir de stockage de fluide sous pression dans un ordre quelconque tour à tour ou au moins simultanément par intermittence.

20. Procédé selon l'une des revendications 14 à 19, **caractérisé en ce que** pour une opération de levage, le dispositif d'alimentation en fluide sous pression fonctionne sélectivement
de manière ouverte seulement en refoulant le fluide sous pression le fluide sous pression dans le raccord de fluide sous pression (2) par le biais du compresseur (31), et/ou
de manière fermée en évacuant le fluide sous pression hors d'un réservoir de stockage de fluide sous pression dans une chambre de fluide sous pression par le biais d'une galerie (95) et/ou,
en particulier en faisant intervenir les deux modes de fonctionnement susmentionnés, de manière partiellement fermée en guidant le fluide sous pression surcomprimé (gDM) appliqué audit au moins un raccord de suralimentation de fluide sous pression (1.1, 1.2) et l'autre fluide sous pression (tDM) fourni par le premier étage de compresseur (31.1) dans le sens de guidage jusqu'au deuxième étage de compresseur (31.2) tour à tour ou au moins simultanément par intermittence.

21. Procédé selon l'une des revendications 14 à 20, **caractérisé en ce que** dans le cadre d'une opération de levage et/ou d'une opération d'abaissement partiellement fermée, une opération de purge a lieu dans le raccord de purge (3) avec régénération d'un dessiccateur (62) dans la conduite principale pneumatique (60).

22. Procédé selon la revendication 21, **caractérisé en ce que** dans le cadre de la régénération du dessiccateur (62), une diminution du volume de pression présent dans le dispositif pneumatique à un volume de pression de consigne a lieu, en particulier au moins une partie du volume de pression refoulé en plus par le premier étage de compresseur (31.1) pendant l'opération de levage et/ou l'opération d'abaissement partiellement fermée étant utilisée pour la régénération du dessiccateur (62) .
